(19) Europäisches Patentamt / European Patent Office / Office européen des brevets

(11) **EP 4 787 758 A1**

(12) **EUROPEAN PATENT APPLICATION**
published in accordance with Art. 153(4) EPC

(43) Date of publication:
**05.08.2026 Bulletin 2026/32**

(21) Application number: **24872762.0**

(22) Date of filing: **03.09.2024**

(51) International Patent Classification (IPC):
*H04L 5/00* (2006.01)    *H04W 72/231* (2023.01)

(52) Cooperative Patent Classification (CPC):
**H04L 5/00; H04W 72/231**

(86) International application number:
**PCT/KR2024/013214**

(87) International publication number:
**WO 2025/071054 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 US 202363540659 P**

(71) Applicant: **LG Electronics Inc.**
**Yeongdeungpo-gu**
**Seoul 07336 (KR)**

(72) Inventors:
• **HWANG, Seunggye**
**Seoul 06772 (KR)**
• **YANG, Suckchel**
**Seoul 06772 (KR)**
• **KIM, Seonwook**
**Seoul 06772 (KR)**
• **SHIM, Jaenam**
**Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND APPARATUS FOR TRANSMITTING AND RECEIVING SIGNALS IN WIRELESS COMMUNICATION SYSTEM**

(57)    A method by which a wireless communication device transmits a signal, according to at least one of embodiments disclosed in the present specification, comprises: receiving reference signal configuration information related to a plurality of carriers through higher layer signaling; receiving control information related to deactivation or dormancy of at least one of the plurality of carriers; and transmitting at least one of a data signal and a reference signal through at least part of the plurality of carriers, wherein the reference signal may be transmitted also on the at least one deactivated or dormant carrier, on the basis that bandwidth (BW) aggregation across the plurality of carriers is configured for the reference signal through the reference signal configuration information.

**FIG. 11**

Receiving reference signal configuration information related to a plurality of carriers — B05

Receiving control information related to deactivation/dormancy of at least one carrier — B10

Transmitting at least one of data signal and reference signal — B15

Description

## TECHNICAL FIELD

The present disclosure relates to a wireless communication system, and more particularly, to a method and apparatus for transmitting or receiving uplink/downlink signals.

## BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

Positioning reference signal/sounding reference signal (PRS/SRS) bandwidth (BW) aggregation is a technique for aggregating and measuring a PRS/SRS on a plurality of positioning frequency layers (PFLs) and/or carriers in order to improve positioning accuracy. According to a request/determination of a location management function (LMF), a base station (BS) may perform BW aggregation.

Among a plurality of carriers, some carriers may be transitioned to a deactivation state or a dormancy state according to the determination and indication of the BS, and due to such deactivation or dormancy operation, the performance of the BW aggregation may be degraded.

## DISCLOSURE

### Technical Problem

An object of the present disclosure is to provide a method and an apparatus for transmitting or receiving a signal more accurately and efficiently in a wireless communication system. For example, the object of the present disclosure is to provide a method and an apparatus for more efficiently managing/controlling operation of uplink (UL) carriers related to data communication, such as deactivation or dormancy operation, and operation of UL carriers related to positioning, such as BW aggregation, when a plurality of UL carriers are configured and operated for a user equipment (UE).

The object of the disclosure is not limited thereto, and other objects may be inferred from the disclosed embodiments.

### Technical Solution

In an aspect of the present disclosure, provided herein is a method for transmitting a signal by a wireless communication device. The method includes: receiving reference signal configuration information related to a plurality of carriers through higher-layer signaling; receiving control information related to deactivation or dormancy of at least one carrier among the plurality of carriers; and transmitting at least one of a data signal and a reference signal through at least part of the plurality of carriers. Based on bandwidth (BW) aggregation across the plurality of carriers being configured for the reference signal through the reference signal configuration information, the transmission of the reference signal may be performed also on the at least one deactivated or dormant carrier.

The transmission of the reference signal may be performed without the transmission of the data signal on the at least one deactivated or dormant carrier.

The control information may include information on whether the deactivation or dormancy of the at least one carrier is for data communication management or for positioning.

Based on the deactivation or dormancy of the at least one carrier being for the data communication management, the transmission of the reference signal may be performed also on the at least one deactivated or dormant carrier.

The configuration for the BW aggregation may include a plurality of sub-configurations related to different carrier sets.

The transmission of the reference signal may be performed based on a specific sub-configuration related to a carrier set including the at least one deactivated or dormant carrier.

The specific sub-configuration to be used for the transmission of the reference signal may be determined based on an indication from a network.

The specific sub-configuration to be used for the transmission of the reference signal may be determined based on the deactivation or dormancy of the at least one carrier.

The specific sub-configuration to be used for the transmission of the reference signal may be determined based on a predetermined priority rule.

The wireless communication device may be a user equipment (UE).

The reference signal may be a sounding reference signal (SRS) for positioning.

In another aspect of the present disclosure, provided herein is a non-transitory storage medium storing instructions configured to cause a processor, when executed by the processor, to perform operations. The operations performed by the processor include: receiving reference signal configuration information related to a plurality of carriers through higher-layer signaling; receiving control information related to deactivation or dormancy of at least one carrier among the plurality of carriers; and transmitting at least one of a data signal and a reference signal through at least part of the plurality of carriers. Based on BW aggregation across the plurality of carriers being configured for the reference signal through the reference signal configuration information, the transmission of the reference signal may be performed also on the at least one deactivated or dormant carrier.

In another aspect of the present disclosure, provided herein is a wireless communication device. The wireless communication device includes: a memory storing instructions; and a processor configured to operate by executing the instructions. Operations of the processor include: receiving reference signal configuration information related to a plurality of carriers through higher-layer signaling; receiving control information related to deactivation or dormancy of at least one carrier among the plurality of carriers; and transmitting at least one of a data signal and a reference signal through at least part of the plurality of carriers. Based on BW aggregation across the plurality of carriers being configured for the reference signal through the reference signal configuration information, the transmission of the reference signal may be performed also on the at least one deactivated or dormant carrier.

The wireless communication device may further include a transceiver.

The wireless communication device may be a UE.

The wireless communication device may be a processing device configured to control a UE.

In another aspect of the present disclosure, provided herein is a method for receiving a signal by a wireless communication device. The method includes: transmitting reference signal configuration information related to a plurality of carriers through higher-layer signaling; transmitting control information related to deactivation or dormancy of at least one carrier among the plurality of carriers; and receiving at least one of a data signal and a reference signal through a subset of the plurality of carriers. Based on BW aggregation across the plurality of carriers being configured for the reference signal through the reference signal configuration information, the reception of the reference signal may be performed also on the at least one deactivated or dormant carrier.

In a further aspect of the present disclosure, provided herein is a wireless communication device. The wireless communication device includes: a memory storing instructions; and a processor configured to operate by executing the instructions. Operations of the processor include: transmitting reference signal configuration information related to a plurality of carriers through higher-layer signaling; transmitting control information related to deactivation or dormancy of at least one carrier among the plurality of carriers; and receiving at least one of a data signal and a reference signal through a subset of the plurality of carriers. Based on BW aggregation across the plurality of carriers being configured for the reference signal through the reference signal configuration information, the reception of the reference signal may be performed also on the at least one deactivated or dormant carrier.

**Advantageous Effects**

According to an embodiment, a signal may be transmitted or received more accurately and efficiently in a wireless communication system. More specifically, according to at least one embodiment, when a plurality of uplink (UL) carriers are configured and operated for a user equipment (UE), by more efficiently managing/controlling operation of UL carriers related to data communication and operation of UL carriers related to positioning, not only operational efficiency of the UE may be improved, but also positioning accuracy expected from an LMF perspective may be ensured.

The effect of the disclosure is not limited to this, and other advantageous effects may be inferred from the disclosed embodiments.

**BRIEF DESCRIPTION OF THE DRAWINGS**

FIG. 1 illustrates physical channels used in a 3rd generation partnership project (3GPP) system as an exemplary wireless communication system, and a general signal transmission method using the same.

FIG. 2 illustrates an example of setting a positioning protocol.

FIG. 3 illustrates an example of Multi RTT.

FIG. 4 illustrates a positioning architecture of a next-generation (NG) wireless access network (RAN).

FIG. 5 illustrates an example of a location service supported by the NG-RAN.

FIG. 6 illustrates an example of a sensing operation according to one embodiment of the present disclosure.

FIG. 7 illustrates an example of a procedure related to a sensing operation according to one embodiment of the present specification.

FIG. 8 illustrates an example of user equipment (UE) operations proposed according to an embodiment.

FIG. 9 illustrates an example of base station (BS) operations proposed according to an embodiment.

FIG. 10 is a diagram for explaining signal transmission and reception between a first wireless communication device and a second wireless communication device according to an embodiment.

FIG. 11 illustrates a flow of a signal transmission method of a first wireless communication device according to an embodiment.

FIG. 12 illustrates a flow of a signal reception method of a second wireless communication device according to an embodiment.

FIG. 13 illustrates a flexible network topology to which some examples of the present disclosure are applicable.

FIG. 14 shows an example of a communication system 100 applied to the present disclosure.

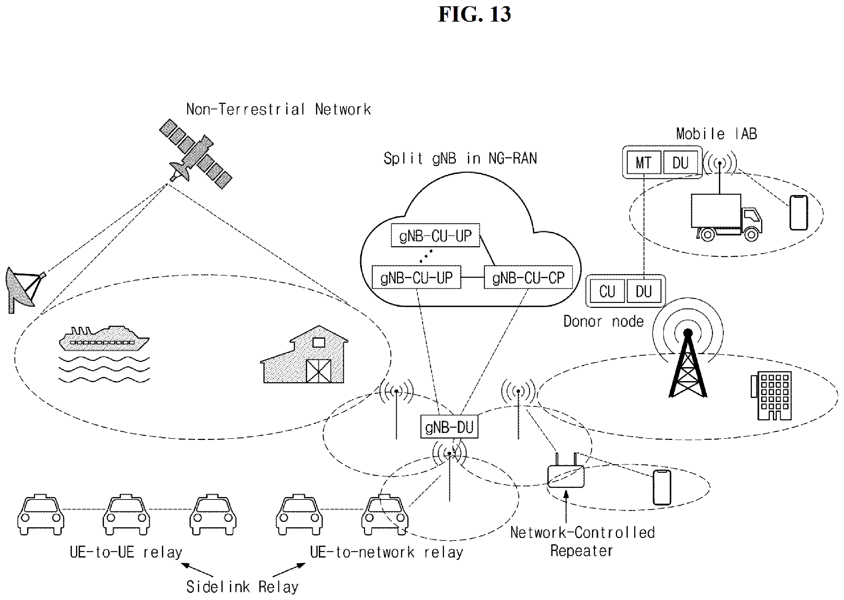

FIG. 13 illustrates an example of a wireless device applicable to the present disclosure.

## DETAILED DESCRIPTION

In the present specification, "A or B" may mean "only A", "only B", or "both A and B". In other words, "A or B" in the present specification may be interpreted as "A and/or B". For example, in the present specification, "A, B or C" may refer to "only A", "only B", "only C", or "any combination of A, B, and C".

Slash (/) or comma used in the present specification may mean "and/or." For example, "A/B" may mean "A and/or B." Accordingly, "A/B" may mean "only A," "only B," or "both A and B." For example, "A, B, C" may mean "A, B, or C."

In the present specification, "at least one of A and B" may mean "only A," "only B", or "both A and B." In addition, the expression "at least one of A or B" or "at least one of A and/or B" in the present specification may be interpreted the same as "at least one of A and B."

In addition, "at least one of A, B and C" in the present specification may refer to "only A", "only B," or "any combination of A, B and C". In addition, "at least one of A, B or C" or "at least one of A, B and/or C" may mean "at least one of A, B and C."

Moreover, parentheses used in the present disclosure may mean "for example." Specifically, when "control information (ABC)" is described, "ABC" may be given as an example of "control information." For example, "control information" may also include DEF as another example. In other words, "control information" in the present disclosure is not limited to "ABC," which may be described as an example of "control information." Further, when "control information (i.e., ABC)" is described, "ABC" may also be given as an example of "control information."

Further, terms such as "first" and "second" in the present disclosure are used solely to distinguish one component from another and are not used to limit the components. Unless specifically limited, they do not restrict the order or importance of components. Therefore, a first component in one embodiment of the present disclosure may be referred to as a second component in another embodiment, and similarly, a second component in one embodiment may be referred to as a first component in another embodiment.

In the following description, 'when, if, in case of' may be replaced with 'based on'.

Technical features described individually in one drawing in the present specification may be implemented individually or simultaneously.

In the present disclosure, a terminal is a user equipment (UE) or a consumer-side device, and may also be referred to as a first node that receives/transmits a signal from/to a base station (BS)/second node/IAB node/transmission-reception point (TRP). The terminal may correspond to a physical node or a logical node. The terminal may correspond to a user-side endpoint or an intermediate point between other endpoints. In communication (including one-to-one, many-to-one, one-to-many, and many-to-many communication) between two points which are not limited to endpoints, the terminal may be a served node. The terminal may be a fixed node or a mobile (unfixed) node in terms of location.

In the present disclosure, a BS is a network-side device and may also be referred to as a second node/IAB node/x-NodeB (where x may be an abbreviation related to radio access technology (RAT))/TRP. The BS may be a physical node or a logical node. The BS may be a network-side endpoint or an intermediate point between other endpoints. In communication (including one-to-one, many-to-one, one-to-many, and many-to-many communication) between two points which are not limited to endpoints, the BS may be a serving node. The BS may be a fixed node or an unfixed node in terms of location.

In the present disclosure, a higher layer parameter may be a parameter that is configured for a UE, pre-configured, or pre-defined. For example, a BS or network may transmit a higher layer parameter to a UE. The higher layer parameter may be transmitted via RRC (Radio Resource Control) signaling or MAC (Medium Access Control) signaling.

In the present disclosure, "configured or defined" may be interpreted as being configured or pre-configured for a device through predefined signaling (e.g., SIB, MAC, RRC) from a BS or network or as being preconfigured for the device. In the present disclosure, "configured or defined" may be interpreted as being preconfigured for the device.

The technologies proposed in the present disclosure may be used in various wireless communication systems such as CDMA (Code Division Multiple Access), FDMA (Frequency Division Multiple Access), TDMA (Time Division Multiple Access), OFDMA (Orthogonal Frequency Division Multiple Access), and SC-FDMA (Single Carrier Frequency Division Multiple Access). CDMA may be implemented as wireless technologies like UTRA (Universal Terrestrial Radio Access) or CDMA2000. TDMA may be implemented as wireless technologies like GSM (Global System for Mobile Communications)/GPRS (General Packet Radio Service)/EDGE (Enhanced Data Rates for GSM Evolution). OFDMA may be implemented as wireless technologies like IEEE (Institute of Electrical and Electronics Engineers) 802.11 (Wi-Fi), IEEE 802.16 (WiMAX), IEEE 802-20, E-UTRA (Evolved UTRA), LTE (Long Term Evolution), and 5G NR.

The technologies proposed in the present disclosure may be implemented as 6G wireless technology and applied to various 6G systems. For example, 6G systems may have key factors such as eMBB (enhanced Mobile Broadband), URLLC (Ultra-Reliable Low Latency Communications), mMTC (massive Machine-Type Communication), AI (Artificial Intelligence) integrated communication, tactile internet, high throughput, high network capacity, high energy efficiency, low backhaul and access network congestion, and enhanced data security.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

<u>Terms and Abbreviations</u>

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System
- GPS: Global Positioning System
- LCS: LoCation Service
- LMF: Location Management Function
- LPP: LTE Positioning Protocol
- MO-LR: Mobile Originated Location Request
- MT-LR: Mobile Terminated Location Request
- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator
- RSTD: Reference Signal Time Difference
- ToA: Time of Arrival
- TP: Transmission Point
- TRP: Transmission and Reception Point
- UE: User Equipment

- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- TX: Transmitter
- RX: Receiver
- RSTD: Reference Signal Time Difference
- RS: Reference Signal
- PRS: Positioning Reference Signal
- SRS: Sounding Reference Signal

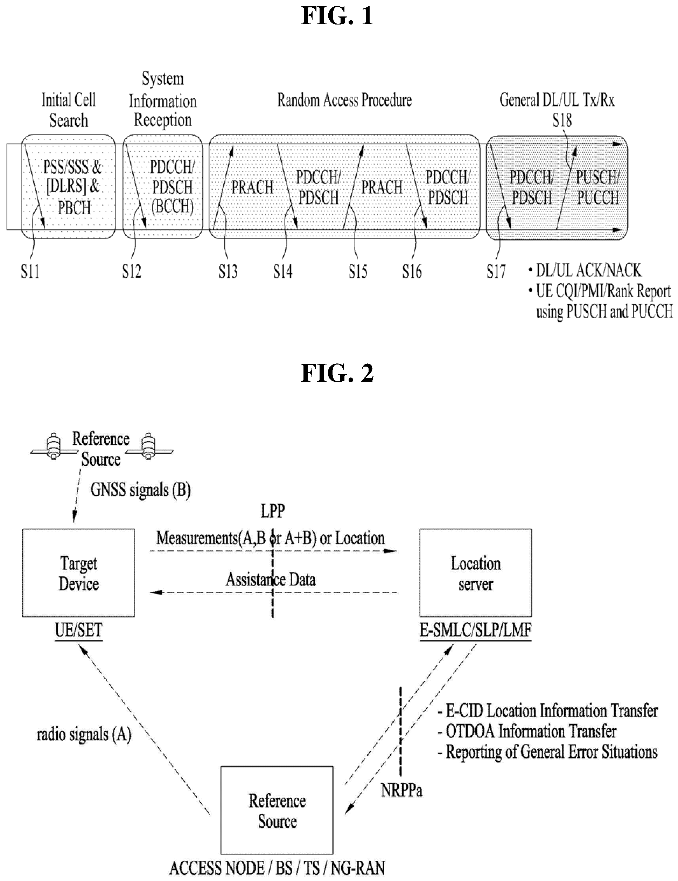

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

## Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

FIG. 2 is a diagram illustrating an exemplary positioning protocol configuration for positioning a UE, to which various embodiments are applicable.

Referring to FIG. 2, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (observed time difference of arrival)

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

- UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance (TADV), and/or AoA

Here, TADV may be divided into Type 1 and Type 2 as follows.

$$\text{TADV Type 1} = (\text{ng-eNB Rx-Tx time difference}) + (\text{UE E-UTRA Rx-Tx time difference})$$

$$\text{TADV Type 2} = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth and frequency/group/sequence hopping.

Multi RTT (round trip time)

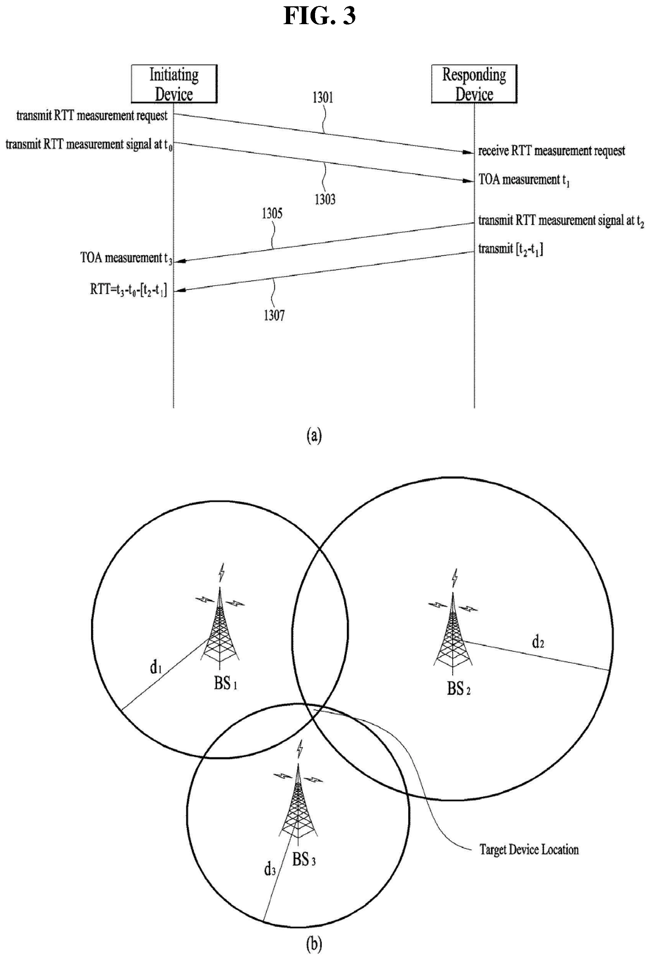

FIG. 3 is a diagram illustrating an exemplary multi-round trip time (multi-RTT) positioning method to which various embodiments are applicable.

Referring to FIG. 3(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at t0 and the responding device may acquire a ToA measurement t1 (1303).

The responding device may transmit an RTT measurement signal at t2 and the initiating device may acquire a ToA measurement t3 (1305).

The responding device may transmit information about [t2-t1], and the initiating device may receive the information and calculate an RTT (1307). The information may be transmitted and received based on a separate signal or in the RTT measurement signal (1305).

Referring to FIG. 3(b), an RTT may correspond to a double-range measurement between two devices. Positioning estimation may be performed from the corresponding information, and multilateration may be used for the positioning estimation. d1, d2, and d3 may be determined based on the measured RTT, and the location of a target device may be determined to be the intersection of the circumferences of circles with radiuses of d1, d2, and d3, in which BS1, BS2, and BS3 (or TRPs) are centered, respectively.

## NG-RAN positioning architecture and procedures

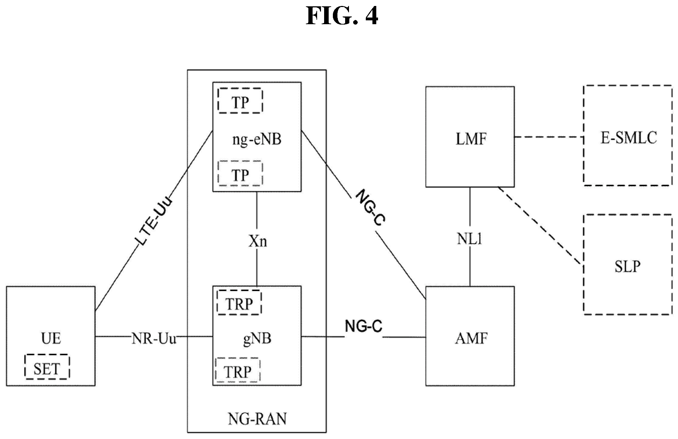

FIG. 4 illustrates a positioning structure of a next generation (NG) radio access network (RAN). The NG RAN may be referred to as a NR RAN or 5G RAN.

An AMF may receive a request for location services related to a specific target UE from other entities (e.g., gateway mobile location centre (GMLC) or UE) or may decide to initiate the location services itself on behalf of the specific target UE (e.g., in the case of IP multimedia subsystem (IMS) emergency calls). Subsequently, the AMF may forward the location service request to an LMF. The LMF may process the location service request, where processing the location service request may include transmitting assistance data to the target UE for UE-based and/or UE-assisted positioning and/or positioning of the target UE. The LMF transmits location service results (e.g., location estimates for the UE) to the AMF. When the location services are requested by other entities (e.g., GMLC or UE), the AMF transmits the location service results to the other entities.

An NG-RAN node may control TRPs/TPs such as RRM or DL-PRS only TPs to support a PRS-based terrestrial beacon system (TBS).

The LMF may be connected to an enhanced serving mobile location centre (E-SMLC) to access universal terrestrial radio access network (UTRAN) information.

The LMF can be connected to a secure user plane location (SUPL) location platform (SLP), which is responsible for positioning relative to the user plane.

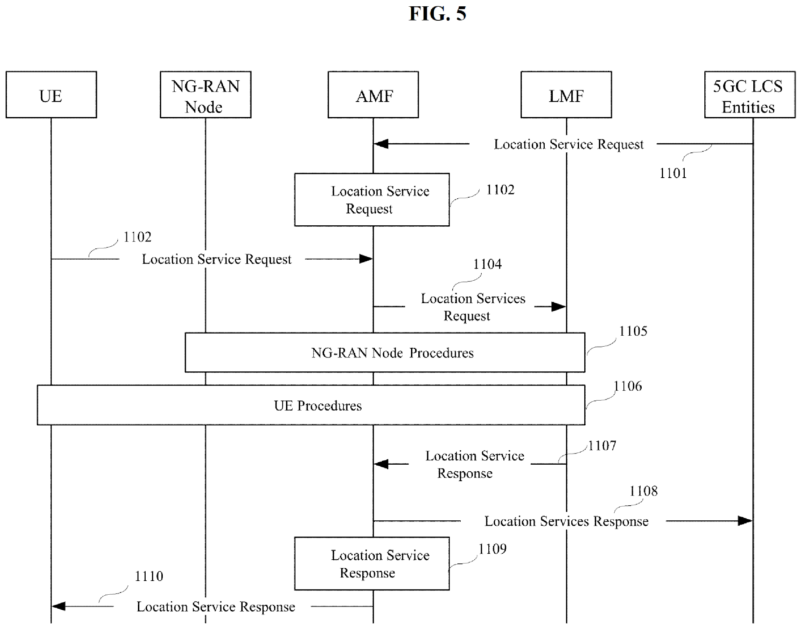

FIG. 5 illustrates an example of location services supported in a NG-RAN.

When a UE is in a connection management idle (CM-IDLE) state, if an AMF receives a location service request, the AMF performs a network trigger service request to configure signaling for a connection to the UE and allocation of a specific serving gNB/ng-eNB. In FIG. 5, it is assumed that the UE is in the connected mode.

Location service requests for the UE may be triggered, and the requests for the UE may be one of steps 1101, 1102, and 1103. For example, an entity in a 5GC such as a GMLC may request location services (e.g., positioning) for a target UE from a serving AMF (1101). Alternatively, the serving AMF may trigger location services (e.g., to find the UE for emergency calls) for the target UE itself (1102). Further, the UE may request location services (e.g., positioning or assistance data transfer) from the serving AMF at the NAS level (1103).

The AMF forwards the location service request to an LMF (1104).

The LMF provides services in the NG-RAN to acquire location measurements or assistance data and initiates a positioning procedure with a neighboring ng-eNB/gNBs (1105).

(Instead of or additionally to step 1105) The LMF initiates the positioning procedure with the UE to obtain location estimates or positioning measurements or transmit location assistance data to the UE (1106).

The LMF provides a location service response to the AMF (1107) (e.g., success or failure and location estimates for the UE if obtained).

(In step 1101) The AMF provides the location service response to the 5GC entity (1108) (e.g., location estimates for the UE).

(In step 1102) The AMF supports the services triggered in step 1102 based on the location service response received in step 1107 (1109) (e.g., providing location estimates related to emergency calls to the GMLC).

(In step 1103) The AMF provides the location service response to the UE (1110) (e.g., location estimates for the UE).

## SRS (Sounding Reference Signal) for Positioning

In Rel. 15 NR systems, periodic, aperiodic, and semi-persistent Rel. 15 SRSs may be transmitted for UL relative time of arrival (UL RTOA), UL SRS-RSRP, and UL-AOA measurements at the BS, thereby supporting UL TDOA and UL AOA.

In Rel. 16/17 NR systems, periodic, aperiodic, and semi-persistent SRSs for positioning may be transmitted for UL RTOA, UL SRS-RSRP, UL-AOA, and gNB Rx-Tx time difference measurements at the BS, thereby supporting for UL TDOA, UL AOA, and multi-RTT.

To prevent confusion between the Rel. 15 SRS and SRS for positioning, the SRS for positioning will be referred to as an SRS-p. Unless otherwise specified, the SRS may be interpreted to mean the SRS-p in the newly proposed methods in this specification.

If a higher layer parameter SRS-PosResource is configured for the SRS (i.e., SRS-p) and a higher layer parameter SpatialRelationInfoPos is configured, the ID of a configuration field of a reference RS is provided. The reference RS may be an SRS configured by the higher layer parameter SRS-Resource or SRS-PosResource, a CSI-RS, an SS/PBCH block, a DL PRS of the serving cell, or a DL PRS configured in the SS/PBCH block.

The UE is not expected to transmit multiple SRS resources with different spatial relationships on the same OFDM symbol.

If the higher layer parameter SpatialRelationInfoPos is not configured, the UE may use either a fixed spatial domain transmission filter or a different spatial domain transmission filter to transmit the SRS-p configured by the higher layer parameter SRS-PosResource across multiple SRS resources.

In the RRC_CONNECTED mode, the UE transmits the SRS-p configured by the higher layer parameter SRS-PosResource within an active UL BWP.

Only one RS source is provided for the higher layer parameter SpatialRelationInfoPos provided for each SRS-p resource.

In the case of operation on the same carrier, if the SRS-p conflicts with a scheduled PUSCH, the SRS-p is dropped on symbols where the collision occurs.

The UE does not expect that SRS-PosResource will be configured on the carrier of the serving cell with a slot format consisting of DL/UL symbols that are not configured for PUSCH/PUCCH transmission.

Depending on UE capabilities, SRS-p resources associated with an initial UL BWP may be configured, and the SRS-p resources are transmitted within the initial UL BWP in the RRC_INACTIVE mode with the same CP and SCS as configured for the initial UL BWP. Depending on UE capabilities, SRS-p resources for positioning may be configured outside the initial BWP in the RRC_INACTIVE mode, and a frequency location, bandwidth, SCS, and CP length may be configured for SRS-p transmission. The SRS-p resources configured outside the initial BWP in the RRC_INACTIVE mode are configured in the same bandwidth and CC as the initial UL BWP.

## Integrated Sensing And Communication (ISAC)

Wireless sensing is a technology enabling information about the environment and/or characteristics of objects within the environment to be obtained by identifying instantaneous linear velocities, angles, distances (ranges) of objects using radio frequencies. Since radio frequency sensing does not require connection to objects via devices within a network, it may provide services for identifying the locations of objects without the need for the devices. The function of obtaining the range, velocity, and angle information from radio-frequency signals may provide a wide range of new functions, such as detection of various objects, object recognition (e.g., vehicles, humans, animals, UAVs), and high-precision positioning, tracking, and activity recognition. Wireless sensing services may provide information to various industries (e.g., unmanned aerial vehicles, smart homes, V2X, factories, railways, public safety, etc.), enabling applications such as intruder detection, assisted vehicle control and navigation, trajectory tracking, collision avoidance, traffic control, and health and mobility management. In some cases, wireless sensing may use non-3GPP-type sensors (e.g., radar, cameras) to additionally support 3GPP-based sensing. For example, the operation of wireless sensing, that is, the sensing operation, may rely on the transmission, reflection, and scattering of wireless sensing signals. Accordingly, wireless sensing may provide an opportunity to enhance existing communication systems from communication networks into wireless communication and sensing networks.

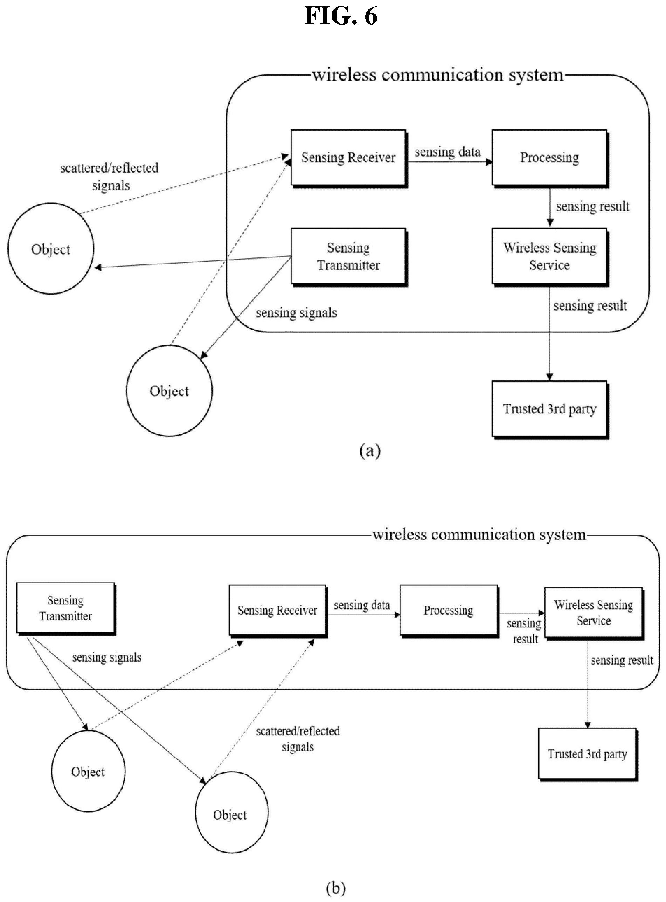

FIG. 6 illustrates an example of a sensing operation according to one embodiment of the present disclosure. The embodiment of FIG. 6 may be combined with various embodiments of the present disclosure. Specifically, FIG. 6(a) illustrates an example of sensing (e.g., monostatic sensing) using a sensing receiver and a sensing transmitter placed at the same location, and FIG. 6(b) illustrates an example of sensing (e.g., bistatic sensing) using a sensing receiver and a sensing transmitter which are separated from each other.

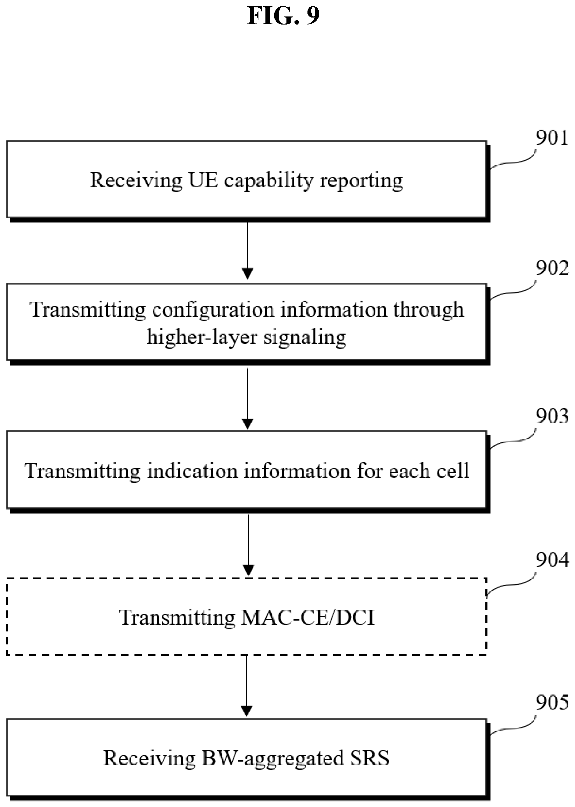

For example, referring to FIG. 9(a), in a 6G network-based wireless communication system according to the present disclosure, the sensing transmitter and sensing receiver may be configured to be included in a single BS (i.e., the same BS) or a single UE (i.e., the same UE). Alternatively, referring to FIG. 9(b), the sensing transmitter and sensing receiver may be included in different BSs, included in different UEs, or included in a UE and a BS, respectively.

In this regard, based on whether each of the sensing transmitter and sensing receiver is included in a BS or a UE, the following six types of sensing modes may be defined.

- Mode 1: A mode in which the sensing transmitter and the sensing receiver are included in a single BS (e.g., a BS-based sensing mode in the monostatic mode)
- Mode 2: A mode in which the sensing transmitter is included in a first BS and the sensing receiver is included in a second BS different from the first BS (e.g., a BS-based sensing mode in the bistatic mode)
- Mode 3: A mode in which the sensing transmitter is included in a BS and the sensing receiver is included in a UE (e.g., a BS-to-UE sensing mode)
- Mode 4: A mode in which the sensing transmitter is included in a UE and the sensing receiver is included in a BS (e.g., a UE-to-BS sensing mode)
- Mode 5: A mode in which the sensing transmitter and the sensing receiver are included in a single UE (e.g., a UE-based sensing mode in the monostatic mode)
- Mode 6: A mode in which the sensing transmitter is included in a first UE and the sensing receiver is included in a second UE different from the first UE (e.g., a UE-based sensing mode in the bistatic mode)

In a 6G network-based wireless communication system according to the present disclosure, one or more of the six sensing modes described above may be used independently or in combination.

Regarding the sensing operation in FIG. 6, the sensing transmitter may transmit a sensing signal for sensing one or more objects (and/or the environment surrounding the objects). For example, the sensing signal may correspond to a radio (frequency) signal defined to be transmittable by a BS/UE in the 6G network-based wireless communication system according to the present disclosure. The sensing receiver may receive a signal scattered/reflected by one or more objects (and/or the environment surrounding the objects) according to the sensing signal transmitted by the sensing transmitter. The sensing receiver may derive sensing data from the scattered/reflected signal, and sensing results may be generated/acquired by processing the sensing data. Here, the sensing results may include characteristic information (e.g., location, distance, velocity, angle, etc.) related to one or more objects (and/or the environment surrounding the objects). The sensing results generated/acquired in this manner may be used for wireless sensing services (e.g., detection or tracking of objects and/or the environment) provided in the 6G network-based wireless communication system according to the present disclosure, or may be provided/disclosed to a trusted third party.

Although the sensing operation in FIG. 6 is described based on a representative example of the operation in the 6G network-based wireless communication system, it may also be extended to cases where UEs/BSs/signals based on earlier generations (e.g., 4G, 5G, etc.) are used.

Additionally, in relation to wireless sensing described in the present disclosure, the time/frequency resources for a sensing operation in the 6G network-based wireless communication system according to the present disclosure and the time/frequency resources for general communication (e.g., UL/DL/sidelink-based communication) may be separately scheduled/configured.

The time/frequency resources for the above-described sensing operation (sensing operations based on FIG. 6) (hereinafter, sensing resources) may be configured/allocated separately from the time/frequency resources for general communication (hereinafter, communication resources).

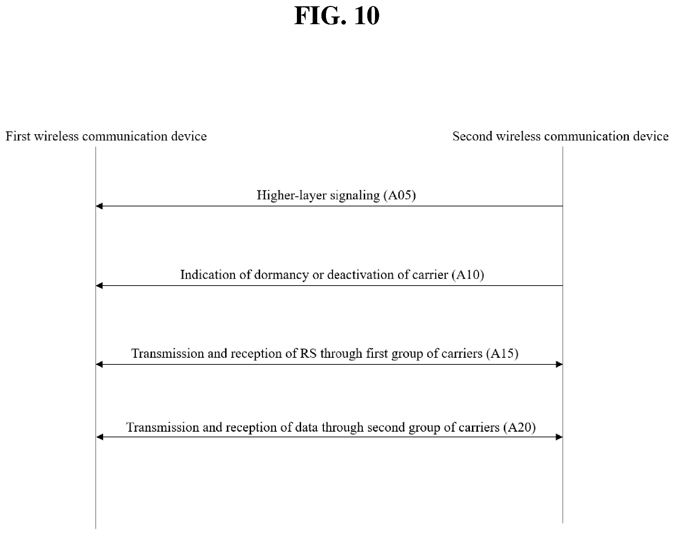

For example, sensing resources may be configured/allocated on a per symbol basis in the time domain and/or on a per resource block basis in the frequency domain. Resources other than those configured/allocated as sensing resources may be used for general communication. That is, from the operational perspective of the BS/UE, sensing resources and communication resources may be configured/allocated based on time-division multiplexing (TDM) and/or frequency-division multiplexing (FDM). Additionally or alternatively, unlike the configuration shown in FIG. 10, sensing resources may also be configured/allocated based on other units in the time domain (e.g., slot, frame, absolute time (ms, $\mu$s)) and/or based on other units in the frequency domain (e.g., subcarrier, carrier, absolute frequency (MHz, GHz)).

Additionally or alternatively, regarding configuration/allocation/scheduling of resources for general communication described in the present disclosure, the relationship between these resources and the sensing resources described above may need to be considered. For example, in configuring/allocating resources for general communication according to embodiment(s) of the present disclosure, the resources may be configured/allocated so as to rate-match or puncture the resource region corresponding to the sensing resources. For example, in scheduling resources for general communication according to embodiment(s) of the present disclosure, the resources may be scheduled so as not to overlap with the resource region corresponding to the sensing resources. When the resources for general communication are configured/allocated/scheduled to overlap with the resource region corresponding to the sensing resources, one of the two operations, or both operations, may be dropped, skipped, or postponed based on priority or a predefined rule. That is, in embodiment(s) of the present disclosure, resources related to general communication (e.g., resources for signals/channels related to UL/DL/sidelink-based data/control) may be configured/allocated/scheduled so as not to overlap with the sensing resources described above.

Additionally, regarding wireless sensing described in the present disclosure, various channel-modeling methods may be applied. Channel modeling related to sensing may refer to configuring a path through which a sensing signal and/or a scattered/reflected signal are transmitted and received, considering an object to be sensed and/or the environment to which the object belong. Channel modeling may be related to the performance/requirements of sensing in a wireless communication system, and therefore it may be an important factor for verification of the feasibility of the sensing function.

Channels related to sensing may be classified into a channel between an object (e.g., a target of interest) and the sensing transmitter/receiver, and a channel between the environment to which the object belongs and the sensing transmitter/receiver. In this regard, channel modeling related to sensing may be classified based on the sensing modes (e.g., the six types described above), object/environment distinction, and/or sensing scenarios. For example, channel modeling for a target in the BS/UE-based monostatic sensing mode, channel modeling for the target in the BS/UE-based bistatic sensing mode, channel modeling for an environment in the BS/UE-based monostatic sensing mode, and channel modeling for an environment in the BS/UE-based bistatic sensing mode may each be optimized differently. For example, various sensing scenarios may be classified into channel modeling for detection, location, and tracking scenarios, channel modeling for motion recognition, and channel modeling for imaging/environment-reconstruction scenarios. Additionally, channel modeling related to sensing may be based on a statistical channel modeling technique and/or a deterministic channel modeling technique. For example, modeling for sensing in a 6G network-based wireless communication system according to the present disclosure may be based on a stochastic-geometry channel modeling technique and/or a hybrid modeling including ray tracing channel modeling technique. Here, the stochastic geometry channel modeling may be based on various statistical characteristics of channel states. Furthermore, the hybrid channel modeling may be based on both the ray tracing technique and the stochastic technique. In the hybrid technique, a channel for an object (e.g., a target of interest) requiring high accuracy and consistency may be modeled using the ray tracing technique, while a channel for an environment may be modeled using the stochastic technique.

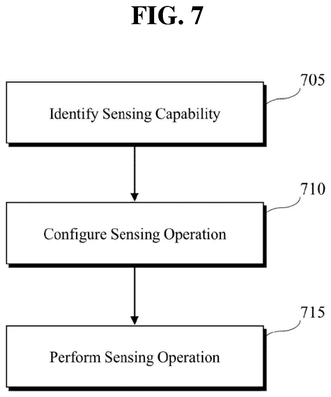

FIG. 7 illustrates an example of a procedure related to a sensing operation according to one embodiment of the present specification. The embodiment of FIG. 7 may be combined with various embodiments disclosed herein.

For example, in a sensing operation involving a UE in the 6G network-based wireless communication system according to the present disclosure, a BS may check the capability of the UE for the sensing operation (705). In this regard, the UE may be configured to report, to the BS, capability information indicating whether it supports the sensing operation. Additionally or alternatively, when the UE is predefined in the specifications to support the sensing operation, the procedure above may be omitted. Furthermore, in the sensing operation involving only the BS, the BS may be configured to report capability information indicating whether it supports the sensing operation to an entity that configures/controls the sensing operation of the BS (e.g., a higher-stage/layer network entity of the BS).

For example, the BS may perform signaling with the UE to exchange configuration information related to the sensing operation (710). For example, the BS may configure/indicate, for the UE, information about the mode of the sensing operation (based on, for example, the six types of modes described above), the entity responsible for the sensing operation (e.g., the sensing transmitter, the sensing receiver), resources for the sensing operation, a target for which the sensing results are intended (e.g., types of wireless sensing services based on the 6G network, a trusted third party), and channel modeling for sensing (e.g., channels between the BS/UE and the object/environment). For example, the BS may receive such information from a higher-stage/layer network entity.

For example, the BS and/or UE may perform the sensing operation based on the configured/indicated information (715). For example, as in FIG. 6, the BS and/or UE may perform a procedure including transmitting a sensing signal, receiving a scattered/reflected signal, deriving sensing data, acquiring sensing results through processing of the sensing data, and providing the sensing results, similarly to the sensing operation of FIG. 6, in the role of the sensing transmitter and/or the sensing receiver. In one example, the sensing results provided through the sensing operation may be utilized in the operations of the BS/UE described in the present disclosure.

## SRS BW aggregation considering cell state

In a wireless communication system, the size or number of frequency resources used for transmission or reception of a signal/channel may be adjusted in order to improve performance. For example, transmitting and receiving nodes may perform simultaneous transmission or reception on a plurality of frequency resources for performance improvement.

In 3GPP New Radio Release 18, a bandwidth (BW) aggregation technique (hereinafter, BW-agg) for simultaneously transmitting and receiving a plurality of RSs, (e.g., PRSs and/or SRSs) using a plurality of carriers (e.g., downlink (DL) carriers and uplink (UL) carriers) in the frequency domain is expected to be introduced to improve positioning accuracy. Specifically, BW-agg is a method of simultaneously transmitting and receiving PRS and/or SRS resources on different frequency resources (e.g., PFLs for PRSs and UL carriers for SRSs) while satisfying specific conditions. The specific conditions for BW-agg may include a condition of being located within an in-band contiguous carrier, a condition related to resource allocation such as a period and a position on the same time axis and an RE mapping pattern on a frequency axis, and a condition of satisfying phase continuity among PRS/SRS resources.

As one implementation example of BW-agg, a transmitter may be configured to ensure phase continuity with respect to different frequency resources to which BW-agg is applied, and a receiver may be configured to regard the different frequency resources for which phase continuity is ensured as a single frequency resource and apply processing such as fast Fourier transform/inverse fast Fourier transform (FFT/IFFT) in order to improve resolution of signal detection.

Hereinafter, the present disclosure is described with a focus on the BW-agg technique in an NR standard. However, the meaning of the term BW-agg used in the present disclosure is not limited thereto, and the term BW-agg may be used to refer to a general technique of bundling a plurality of frequency resources into one and utilizing the bundled frequency resources for transmission of a signal/channel.

As another aspect of benefits that may be obtained by using a plurality of frequency resources, a data communication aspect such as carrier aggregation (CA) may be considered. CA is a technique that enables data transmission and reception by using a plurality of frequency resources. For example, in NR, transmission and reception of signals/channels may be performed by configuring one primary cell (PCell) and one or more secondary cells (SCells) for a UE.

Data communication and positioning may be regarded as independent functions, and frequency resources used for data communication and positioning may be shared or independently configured according to implementation.

- When frequency resources are shared, the transmitter and the receiver may maintain the same resources without changing a used frequency band, and thus it may be advantageous in supporting efficiency of frequency resource operation and low-latency operation.

- In some situations, independent operation without sharing frequency resources may be required. For example, for some UEs or services, high positioning accuracy may be required, while a data rate required for transmission and reception may be relatively low, and in such a case, the number or size of frequency resources required for data communication and positioning may be different. In addition, an entity that determines/configures a data rate required for data communication and an entity that requires/configures positioning accuracy for positioning may be different from each other. In general, requirements for data communication may be determined by a BS such as a gNB, whereas, in the case of positioning, such operation may be determined by an LMF. In consideration of the above, for data communication, activation of a relatively small number of frequency resources may be sufficient, whereas for positioning, activation of a relatively larger number of frequency resources may be required.

For data communication, in consideration of power consumption of the UE, an operation may be used in which activation of frequency resources and expected operations on the respective resources are configured/indicated in a plurality of stages. For example, in a 3GPP NR standard, an activation/deactivation state may be configured for each serving cell (including a PCell and SCells), and a dormancy/non-dormancy operation may also be configured for SCells.

In general, activation/deactivation refers to an operation in which transmission and reception and configuration of signals/channels expected in the cell are all activated or deactivated.

The dormancy/non-dormancy operation refer to an operation in which some of transmission and reception and configuration of signals/channels expected in the cell are activated or deactivated. For example, the dormancy/non-dormancy operation defined in 3GPP NR may provide a power saving benefit to the UE by configuring/indicating whether the UE performs PDCCH monitoring in the cell. In this case, for the SCell, control of whether to transmit or receive UL signals/channels including an SRS may be included together in the dormancy operation.

According to Table 1 excerpted from 3GPP NR standard document TS 38.321 of Release 17, for an SRS to which BW-agg is not applied, it is defined that the UE and the BS do not expect transmission or reception of the SRS on an SCell designated as being in a dormancy state.

[Table 1]

| |
|---|
| 1> If the BWP is activated and an active DL BWP for the serving cell is a dormant BWP:<br>  2> If running, stop the BWP inactivity timer (BWP-inactivitytimer) for the BWP<br>  2> Do not monitor the PDCCH on the BWP<br>  2> Do not monitor the PDCCH for the BWP<br>  2> Do not receive the DL-SCH on the BWP<br><br>  2> Do not report the CSI on the BWP, and do not report the CSI for the BWP except for an aperiodic CSI report<br>  2> Do not transmit the SRS on the BWP<br>  2> Do not transmit the UL-SCH on the BWP<br>  2> Do not transmit the RACH on the BWP<br>  2> Do not transmit the PUCCH on the BWP<br>  2> Clear a configured DL assignment and a configured UL grant type 2 related to the SCell, respectively<br>  2> Suspend a configured UL grant type 1 related to the SCell |

(continued)

| 2> If configured, perform beam failure detection, and if beam failure is detected, perform beam failure recovery for the SCell |
| --- |

In general, in methods in which frequency resources for data communication and positioning are shared, when activation/deactivation for a serving cell is configured/indicated, the configuration/indication may be commonly applied to both data communication and positioning. However, when positioning performance is intended to be improved by combining a plurality of frequency resources, such as BW-agg, and when the sizes of frequency resources suitable for data communication and positioning are different, a conventional common frequency resource activation/deactivation method may be disadvantageous in terms of power consumption of the UE or efficient utilization of frequency resources.

In the present disclosure, in consideration of such problems, when the UE is configured with an SRS where BW-agg for positioning is applied (hereinafter, BW-agg-SRS), operations of the BS and the UE and signaling methods associated therewith are addressed to apply different operations and/or indications to data communication and BW-agg-SRS when activating or deactivating a plurality of configured frequency resources.

In an embodiment of the present disclosure, the description is focused on a BW aggregation technique of a positioning SRS for UL positioning (hereinafter, SRS-p). However, the present disclosure is not limited to the SRS-p, and may be generally applied to BW aggregation of other UL signals or DL signals. The methods proposed in the present disclosure may be applied to all types of transmission and reception schemes and positioning techniques expected by the BS and the UE. The proposed methods may be used for ISAC described above, and in this case, the SRS may be replaced with a sensing signal for ISAC.

The methods proposed in the present disclosure are described with a focus on an SCell dormancy/non-dormancy operation and a cell activation/deactivation operation in a 3GPP NR system. However, the present disclosure is not limited thereto, and may be generally applied to a concept of radio resources and operations allocated/indicated to the UE based on a cell or other radio transmission and reception resources. For example, the cell activation/deactivation operation may be interpreted as being extended to a concept in which the UE activates or deactivates all transmission and/or reception operations on a specific radio frequency resource. In addition, the SCell dormancy/non-dormancy operation may be interpreted as being extended to a concept in which the UE activates or deactivates some of transmission and/or reception operations on a specific radio frequency resource. Accordingly, the proposed methods may be applied to all types of radio resource activation/deactivation operations expected by the BS and the UE.

In addition, the present disclosure may be applied to cases in which BW aggregation operation of various RSs including an SRS-p is performed, or similar operations are used, in communication systems such as LTE, NR, and/or 6G. Accordingly, the proposed methods may be applied to all types of wireless communication systems expected by the BS and the UE.

In addition, the present disclosure is not limited to a case in which a plurality of signals/channels are transmitted and received through a plurality of frequency resources, and may also be applied to a case in which a single signal/channel is transmitted and received through a plurality of frequency resources (e.g., a case in which one PRS/SRS resource spans a plurality of PFLs/UL carriers).

Each method proposed in the present disclosure may operate independently without a separate combination, or one or more methods may be combined to operate in an associated manner. Some terms, symbols, and orders used for description may be replaced with other terms, symbols, and orders.

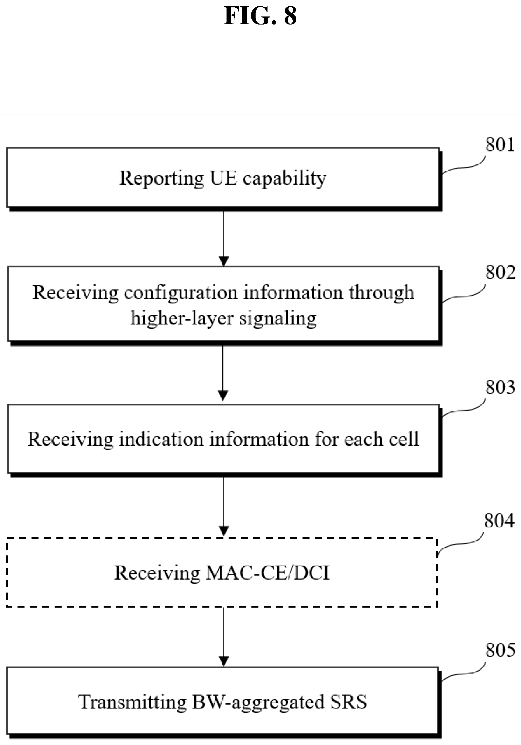

FIG. 8 illustrates an exemplary sequence of UE operations proposed in an embodiment.

Referring to FIG. 8, the UE may report UE capability information of the UE to a BS (801). The reported UE capability information may include information related to transmission of a BW-agg-SRS.

Thereafter, the UE may receive configuration information for UL signals/channels including the BW-agg-SRS (802). The configuration information may be received, for example, through higher-layer signaling transmitted by the BS, such as dedicated RRC signaling or an SIB. The configuration information may include at least one of information on UL carriers on which SRS resources constituting the BW-agg-SRS are transmitted, information on activation/deactivation, and/or information on an SCell dormancy configuration.

Thereafter, the UE may receive indication information for each cell from the BS (803). For example, the UE may receive indication information related to an activation/deactivation indication and/or an SCell dormancy operation.

Based on the information received in steps 802 and 803, the UE may determine locations of UL carriers on which the BW-agg-SRS is performed, and a specific method may be implemented by combining one or more of methods proposed below. The UE may perform transmission of the BW-agg-SRS at the determined locations of the UL carriers (805).

If the BW-agg-SRS is activated or triggered by a MAC-CE or DCI, a process in which the UE receives MAC-CE/DCI information indicating such activation or triggering may be additionally performed prior to step 805 (804).

FIG. 9 illustrates an exemplary sequence of operations of a BS/network (or another higher node such as an LMF) proposed in an embodiment.

Referring to FIG. 9, the BS may receive UE capability information of a UE transmitted by the UE (901). The UE capability information may include information related to transmission of a BW-agg-SRS.

Thereafter, the BS may determine configuration information for UL signals/channels including the BW-agg-SRS and transmit the configuration information to the UE (902). The configuration information may be transmitted, for example, through higher-layer signaling such as dedicated RRC signaling or an SIB. The configuration information may include at least one of information on UL carriers on which SRS resources constituting the BW-agg-SRS are transmitted, information on activation/deactivation, and/or information on an SCell dormancy configuration.

Thereafter, the BS may transmit indication information for each cell to the UE (903). For example, the BS may provide indication information related to an activation/deactivation indication and/or an SCell dormancy operation.

The BS may determine locations of UL carriers on which the BW-agg-SRS is performed based on the information received by the UE in steps 902 and 903. The BS may expect that the UE performs transmission of the BW-agg-SRS at the determined locations of the UL carriers. The BS may receive the BW-agg-SRS transmitted by the UE at the locations and measure the received BW-agg-SRS (905).

If a target BW-agg-SRS is activated or triggered by a MAC-CE or DCI, the BS may transmit activation or trigger indication information to the UE (904), and if the transmission is semi-statically configured, step 904 may be omitted.

Hereinafter, when BW-agg-RS transmission is configured for a plurality of frequency resources (e.g., UL carriers), if deactivation or transition to a low-power state is indicated for a specific frequency resource, methods for transmitting and receiving the BW-agg-RS (e.g., BW-agg-SRS) and UE/BS operations therefor will be described.

**[Proposal 1]** SRS transmission and reception when SCell dormancy is indicated for specific frequency resource included in transmission of BW-agg-SRS

UE operations are proposed for a case in which the UE is configured with BW-agg-SRS transmission for a plurality of frequency resources and a dormancy operation is indicated for one or more SCells among the plurality of frequency resources. For example, a case may be considered in which BW-agg-SRS transmission is configured/indicated to the UE on N UL carriers, and an SCell dormancy state is indicated for M (< N) UL carriers among the N UL carriers. The SCell dormancy indication may be semi-statically configured through a higher-layer signal such as an RRC signal, or the SCell dormancy indication may be dynamically indicated through a lower-layer signal such as a MAC-CE or DCI. Both cases may be considered.

Specifically, even when SCell dormancy is configured/indicated for a specific UL carrier, the UE may be configured to perform BW-agg-SRS transmission over an aggregated bandwidth including an SCell for which dormancy is configured/indicated. This means that, when SRS transmission for a UL carrier for which SCell dormancy is indicated is included in a specific BW-agg-SRS configuration, the corresponding SRS transmission may be performed without being affected by the SCell dormancy. In this case, transmission and reception of other DL/UL signals/channels excluding the BW-agg-SRS transmission (e.g., including SRS transmission for which the BW-agg-SRS is not configured) may follow existing operations (e.g., transmission and reception of other DL/UL signals/channels excluding the BW-agg-SRS transmission follow dormancy), and the transmission and reception may not be affected by the proposed methods.

Proposal 1 may not necessarily mean that SRS transmission configured as a BW-agg-SRS is always guaranteed on a UL carrier in the SCell dormancy state. If SRS dropping occurs due to a separate condition (e.g., dropping of the SRS due to a collision with a UL signal/channel having a higher priority), the SRS may be dropped in accordance with an existing operation.

For example, when BW-agg-SRS transmission is configured on three UL carriers, if an SCell dormancy state is indicated for one specific UL carrier, the UE may perform the BW-agg-SRS transmission on the three UL carriers unless there is an additional constraint.

(Sub-Option 1) When Proposal 1 is applied, a UL carrier in the SCell dormancy state may be regarded as an SRS-transmission-dedicated UL carrier for which transmission of a PUCCH/PUSCH is not expected. In this case, a retuning time including a guard period may be configured before and after transmission of the BW-agg-SRS. This may be to support minimization of power consumption for an SCell in the dormancy state by allowing the UE to maintain a relatively narrowband RF during most time periods and to use a relatively wideband RF only during a time period in which transmission of the BW-agg-SRS is required.

(Sub-Option 2) When Proposal 1 is applied, whether SRS transmission is performed on a UL carrier in the SCell dormancy state may be determined according to a specific condition. As one example of the specific condition, whether a phase continuity condition is satisfied between SRS transmission on another UL carrier included in BW-agg-SRS transmission and SRS transmission on the UL carrier in the SCell dormancy state may be included. Specific conditions that may be used to determine satisfaction of the phase continuity condition may include whether SRS transmission is capable of being performed on at least one adjacent UL carrier among other UL carriers included in the BW-agg-SRS transmission. For example, when the BW-agg-SRS transmission is configured for three in-band contiguous UL carriers and SRS transmission is incapable of being performed on a middle UL carrier among the three UL carriers (e.g., when a corresponding cell is deactivated and SRS transmission is not allowed), the UE may be unable to maintain phase continuity for SRSs targeted for the BW-agg-SRS transmission. In this case, when one of the remaining UL carriers is indicated to be in an SCell dormancy state, it may be determined that SRS transmission is not performed on the corresponding UL carrier. As another example of the specific condition, a case in which SRS transmission is not performed on all UL carriers other than the UL carrier in the SCell dormancy state may be included. In this case, since an SRS transmitted on the UL carrier in the SCell dormancy state may not obtain a benefit of the BW-agg-SRS form, it may be advantageous not to transmit the SRS on the UL carrier in the SCell dormancy state, similarly to existing SRS transmission.

(Sub-Option 3) Whether Proposal 1 is applied may be configured/indicated by the BS. In this case, the configuration/indication may also be determined/performed by a higher node other than the BS, for example, a location server such as an LMF. This may provide a benefit in that a higher node such as the BS may configure/indicate an operation suitable for each UE by considering requirements related to power efficiency of the UE and positioning accuracy.

Proposal 1 is described based on the SCell dormancy operation. However, the same concept may be applied to a cell activation/deactivation indication. For example, a state indicated as SCell dormancy may correspond to cell deactivation, and the proposed techniques may be used.

Proposal 1 has an advantage in that positioning accuracy may be ensured by maintaining transmission of a BW-agg-SRS for positioning purposes even when SCell dormancy is configured/indicated on a specific UL carrier for purposes such as power saving of the UE.

## [Proposal 2] Individual configuration/indication of deactivation operation for cell based on purposes

A cell activation/deactivation configuration/indication for data communication and a cell activation/deactivation configuration/indication for positioning may be distinguished and individually configured/indicated. For example, the application scope of a cell activation/deactivation operation for positioning may be limited to transmission of a BW-agg-SRS.

As one specific embodiment, fields for configuring/indicating activation/deactivation for each cell may be independently configured between data communication and positioning.

The indication of cell deactivation for data communication does not affect cell deactivation for positioning, and accordingly, SRS transmission for the BW-agg-SRS on the corresponding carrier may be performed without being affected by the cell activation/deactivation indication for data communication.

The indication of cell deactivation for positioning does not affect cell deactivation for data communication, and accordingly, the SRS transmission for the BW-agg-SRS and related operations on the corresponding carrier may be disabled by the cell deactivation indication for positioning. However, operations other than the BW-agg-SRS (e.g., data communication and SRS transmission not included in the BW-agg-SRS transmission) may not be affected by the cell deactivation indication for positioning.

This may be advantageous in that the BS or a higher node is supported to control UE operations for data communication and UE operations for positioning in a differentiated manner, thereby providing a high level of flexibility in applying cell activation/deactivation according to different situations.

As another specific embodiment, fields for configuring/indicating activation/deactivation for each cell may be configured with three states: (i) cell activation for all purposes, (ii) cell deactivation for data communication, and (iii) cell deactivation for all purposes.

(i) If the BS configures/indicates cell activation for all purposes, the UE may determine that cell activation including both data communication and positioning is configured/indicated. The UE may perform the SRS transmission for the BW-agg-SRS on the corresponding carrier.
(ii) If the BS configures/indicates cell deactivation for data communication, the UE may perform only operations for positioning. In this case, the SRS transmission for the BW-agg-SRS on the corresponding UL carrier may be included.
(iii) If the BS indicates cell deactivation for all purposes, the UE may determine that cell deactivation including both data communication and positioning is configured/indicated, and the UE may be configured not to perform all operations on the corresponding carrier, including SRS transmission for the BW-agg-SRS, in accordance with the agreement. This may be advantageous in reducing signaling overhead by omitting configuration/indication of cell deactivation for positioning, in consideration of a case in which individually indicating cell deactivation for positioning (in particular, the SRS transmission for the BW-agg-SRS) is generally not useful.

## [Proposal 3] Individual configuration/indication of SCell dormancy operation based on purposes

An SCell dormancy configuration/indication for data communication and an SCell dormancy configuration/indication for positioning may be distinguished and individually configured/indicated. For example, the application scope of an SCell dormancy operation for positioning may be limited to transmission of a BW-agg-SRS.

As one specific embodiment, fields for configuring/indicating SCell dormancy for each cell may be independently configured between data communication and positioning.

The indication of SCell dormancy for data communication does not affect SCell dormancy for positioning, and accordingly, SRS transmission for the BW-agg-SRS on the corresponding carrier may not be affected by the SCell dormancy indication for data communication.

The indication of SCell dormancy for positioning does not affect SCell dormancy for data communication, and accordingly, the SRS transmission for the BW-agg-SRS and related operations on the corresponding carrier may be controlled by the SCell dormancy indication for positioning. Operations other than the SRS transmission for the BW-agg-SRS (e.g., data communication and SRS transmission not included in the BW-agg-SRS transmission) may not be affected by the SCell dormancy indication for positioning.

As one specific example, when the SCell dormancy indication is provided by DCI format 2-6, DCI format 2-6 may include a first field indicating SCell dormancy for data communication and a second field indicating SCell dormancy for positioning, where the first field and the second field are provided as independent regions. In this case, the size (i.e., the number of bits) of each of the first field and the second field may be the same or different, and the index of an SCell targeted by each field may be configured differently.

The proposed method may be advantageous in that the BS or a higher node is supported to control UE operations for data communication and UE operations for positioning in a differentiated manner, thereby providing a high level of flexibility in applying SCell dormancy according to different situations.

As another specific embodiment, fields for configuring/indicating SCell dormancy for each cell may be configured with two states: (i) SCell dormancy for all purposes and (ii) SCell dormancy for data communication.

(i) If the BS indicates SCell dormancy for all purposes, the UE may determine that SCell dormancy including both data communication and positioning is configured/indicated, and the UE may be configured not to perform all operations on the corresponding carrier, including the SRS transmission for the BW-agg-SRS, in accordance with the agreement.
(ii) If the BS configures/indicates SCell dormancy for data communication, the UE may perform only operations for positioning, and SRS transmission for the BW-agg-SRS on the corresponding UL carrier may be included.

As one specific example, when the SCell dormancy indication is provided by DCI format 2-6, a 1-bit common indicator for distinguishing the two states (i)/(ii) described above may be added in DCI format 2-6. When the common indicator bit indicates that all purposes are targeted, the SCell dormancy operation indicated by DCI format 2-6 is commonly applied to data communication and positioning, and if a specific SCell is indicated to be in the dormancy state, the UE may be configured not to perform transmission including the SRS transmission for the BW-agg-SRS on the corresponding UL carrier. Alternatively, when the common indicator bit indicates that only data communication is targeted, the SCell dormancy operation indicated by DCI format 2-6 is applied only to data communication, and even if the specific SCell is indicated to be in the dormancy state, the UE may be configured to perform the SRS transmission for the BW-agg-SRS on the corresponding UL carrier.

This may be advantageous in reducing signaling overhead by omitting configuration/indication of SCell dormancy for positioning, in consideration of a case in which individually indicating SCell dormancy for positioning (in particular, the SRS transmission for the BW-agg-SRS) is generally not useful.

**[Proposal 4] Determination of BW-agg-SRS configuration according to cell activation/deactivation state or SCell dormancy configuration/indication state**

A BW-agg-SRS configuration may be determined differently based on a cell activation/deactivation state or an SCell dormancy state.

For convenience of description, hereinafter, a term "sub-configuration scheme" is used to describe a configured structure in a representative manner.

Specifically, a BW-agg-SRS configured for the UE may be composed of one or more sub-configuration schemes. In this case, combinations of UL carriers used for SRS transmission of each sub-configuration scheme may be different from each other. For example, when a BW-agg-SRS having two sub-configuration schemes is configured on a frequency band in which a total of three UL carriers may be operated, one sub-configuration scheme may be configured as a BW-agg-SRS using UL carriers having indices 0 and 1, and the other sub-configuration scheme may be configured as a BW-agg-SRS using UL carriers having indices 1 and 2. The UL carrier indices used in the above example are terms used for convenience of description, and the present disclosure are not limited thereto.

In other words, a set of a plurality of BW-agg-SRS configurations may be used as a plurality of sub-configuration schemes. In this case, among the BW-agg-SRS configurations included in each set, combinations of UL carriers used for SRS transmission may be configured to be different from each other.

In a BW-agg-SRS configuration composed of one or more sub-configuration schemes, a method for determining a sub-configuration scheme actually used may be selected from one of the following options or a combination thereof.

(Option 4-1) The BS (or a higher node) (e.g., an LMF) may indicate a sub-configuration scheme of BW-agg-SRS to be used to the UE through an explicit indication. This has an advantage in that an explicit and independent indication by the BS is enabled, thereby providing a high level of scheduling flexibility from the perspective of the BS.

(Option 4-2) A sub-configuration scheme of BW-agg-SRS to be used by the UE may be determined according to a cell activation/deactivation state. To this end, the BS (or a higher node) (e.g., an LMF) may preconfigure a correspondence relationship between possible cell activation/deactivation states and sub-configuration schemes and provide the corresponding information to the UE (e.g., by using higher-layer signaling such as an RRC signal). This has an advantage in that separate transmission and reception of indication information for dynamically indicating a sub-configuration scheme are not required, and at the same time, an advantage may be expected in that the BS is provided with a basis for predicting suitable situations and preconfiguring corresponding relationships therefor. The cell activation/deactivation of this option may be replaced with and applied as a method based on SCell dormancy.

(Option 4-3) A sub-configuration scheme of BW-agg-SRS to be used by the UE may be determined according to a cell activation/deactivation state, and in this case, the UE may be configured to select the sub-configuration scheme according to a predefined priority rule.

- (i) For example, the priority rule may be defined such that a sub-configuration scheme having a larger number of UL carriers in the activation state has a higher priority. This may be because a larger number of UL carriers in the activation state is advantageous in improving positioning accuracy.
- (ii) As another example, the priority rule may be defined such that a sub-configuration scheme including a carrier on which transmission of a PUCCH/PUSCH is possible or a sub-configuration scheme including a larger number of such carriers has a higher priority. This may be advantageous in that the UE aligns carriers for PUSCH/PUCCH transmission and SRS transmission, thereby efficiently managing a required RF size.
- (iii) As another example, the priority rule may be defined such that a higher priority is assigned to a sub-configuration scheme including a PCell or a PSCell. This may be consistent with a purpose of maximizing assurance of SRS transmission for the PCell/PSCell in consideration of the importance of the PCell/PSCell in multi-carrier operation.

In Option 4-3, cell activation/deactivation may be replaced with SCell dormancy.

FIG. 10 is a diagram for explaining signal transmission and reception between a first wireless communication device and a second wireless communication device according to an embodiment.

Referring to FIG. 10, the first wireless communication device may receive higher-layer signaling one or more times from the second wireless communication device (A05). The higher-layer signaling may include, for example, information for configuring a plurality of carriers for the first wireless communication device, information for configuring data transmission and reception, and/or information for configuring RS transmission and reception. The RS transmission and reception configuration may include a configuration for BW aggregation across at least two carriers.

The second wireless communication device may indicate dormancy or deactivation of at least one carrier among the plurality of carriers configured for the first wireless communication device (A10).

The first wireless communication device and the second wireless communication device may transmit and receive an RS through a first group of carriers including at least one dormant or deactivated carrier (A15). The first group of carriers through which the RS is transmitted and received may be carriers for which BW aggregation of the RS is configured.

The first wireless communication device and the second wireless communication device may transmit and receive data through a second group of carriers excluding the at least one dormant or deactivated carrier (A20).

The first wireless communication device may be a UE.

The second wireless communication device may be a BS/network node.

The RS may be a UL RS and/or a DL RS.

The data may be UL data and/or DL data.

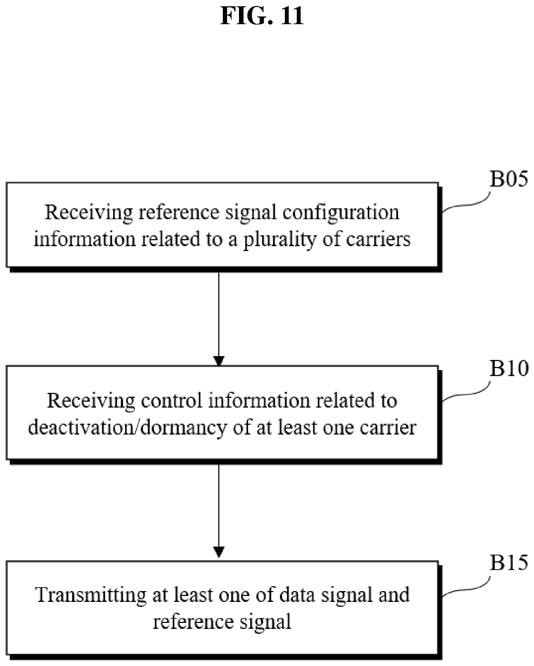

FIG. 11 illustrates a flow of a signal transmission method of a first wireless communication device according to an embodiment. The first wireless communication device may be a UE.

Referring to FIG. 11, the first wireless communication device may receive RS configuration information related to a plurality of carriers through higher-layer signaling (B05).

The first wireless communication device may receive control information related to deactivation or dormancy of at least one carrier among the plurality of carriers (B10).

The first wireless communication device may transmit at least one of a data signal and an RS through at least part of the plurality of carriers (B15). Based on BW aggregation across the plurality of carriers being configured for the RS through the RS configuration information, the transmission of the RS may be performed also on the at least one deactivated or dormant carrier.

The transmission of the RS may be performed without transmission of the data signal on the at least one deactivated or dormant carrier.

The control information may include information on whether the deactivation or dormancy of the at least one carrier is for data communication management or for positioning.

Based on the deactivation or dormancy of the at least one carrier being for the data communication management, the transmission of the RS may be performed also on the at least one deactivated or dormant carrier.

The configuration for the BW aggregation may include a plurality of sub-configurations related to different carrier sets.

The transmission of the RS may be performed based on a specific sub-configuration related to a carrier set including the at least one deactivated or dormant carrier.

The specific sub-configuration to be used for the transmission of the RS may be determined based on an indication from a network.

The specific sub-configuration to be used for the transmission of the RS may be determined based on the deactivation or dormancy of the at least one carrier.

The specific sub-configuration to be used for the transmission of the RS may be determined based on a predetermined priority rule.

The RS may be an SRS for positioning.

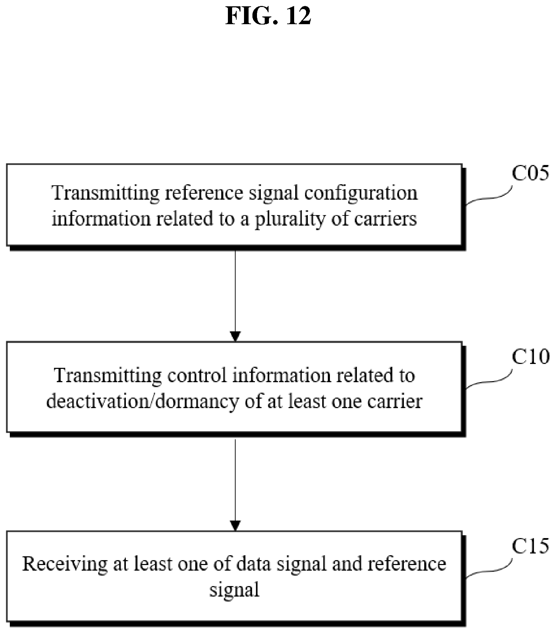

FIG. 12 illustrates a flow of a signal reception method of a second wireless communication device according to an embodiment. The second wireless communication device may be a BS/network node.

Referring to FIG. 12, the second wireless communication device may transmit RS configuration information related to a plurality of carriers through higher-layer signaling (C05).

The second wireless communication device may transmit control information related to deactivation or dormancy of at least one carrier among the plurality of carriers (C10).

The second wireless communication device may receive at least one of a data signal and an RS through at least part of the plurality of carriers (C15).

Based on BW aggregation across the plurality of carriers being configured for the RS through the RS configuration information, the reception of the RS may be performed also on the at least one deactivated or dormant carrier.

The reception of the RS may be performed without the reception of the data signal on the at least one deactivated or dormant carrier.

The control information may include information on whether the deactivation or dormancy of the at least one carrier is for data communication management or for positioning.

Based on the deactivation or dormancy of the at least one carrier being for the data communication management, the reception of the RS may be performed also on the at least one deactivated or dormant carrier.

The configuration for the BW aggregation may include a plurality of sub-configurations related to different carrier sets.

The reception of the RS may be performed based on a specific sub-configuration related to a carrier set including the at least one deactivated or dormant carrier.

The second wireless communication device may indicate, to the first wireless communication device, the specific sub-configuration to be used for the reception of the RS.

The specific sub-configuration to be used for the reception of the RS may be determined based on the deactivation or dormancy of the at least one carrier.

The specific sub-configuration to be used for the reception of the RS may be determined based on a predetermined priority rule.

The RS may be an SRS for positioning.

FIG. 13 illustrates a flexible network topology to which some examples of the present disclosure are applicable.

To compensate for incomplete network coverage areas, a network topology configured with a split radio access network (RAN) in a more flexible and resilient manner may be considered. To this end, various nodes such as an IAB node, a relay, and an RF repeater as illustrated in the example of FIG. 13 may be applied, and a non-terrestrial network (NTN) may also be integrated. For example, an IAB node may correspond to a node providing a wireless backhaul. For example, a relay may refer to an intermediate point, and a sidelink relay, which is a relay as which a UE functions, may collectively refer to a UE-to-network (U2N) relay and a UE-to-UE (U2U) relay. For example, an RF repeater may correspond to a node that performs simple signal amplification and forwarding, and a network-controlled repeater may adjust a transmission/reception configuration based on information provided from a network, in addition to signal amplification and forwarding. For example, an NTN node may correspond to a satellite or aircraft providing NTN coverage, which is difficult for a terrestrial network to provide. In addition to these examples, various intermediate points may be introduced to improve the network topology.

Referring to FIG. 13, a split RAN may support division of a gNB into one centralized unit (CU) and one or more distributed units (DUs). The CU and the DUs may correspond to logical units. The CU may be further divided into a control plane (CP) part and one or more user plane (UP) parts. Since a CP-UP failure affects not only a CU-UP but also a DU, various intermediate points may be introduced to compensate for the failure.

An intermediate point may correspond to a UE or a gNB depending on its relative relationship with other nodes. For example, an IAB node may include a mobile-termination (MT) part and a DU. The MT may connect the IAB node to a donor node. The DU of the IAB node may serve other UEs or connect to another IAB node to provide a multi-hop wireless backhaul to a UE. That is, the IAB node may correspond to a gNB in its relative relationship with a user-side node, and to a UE in its relative relationship with a network-side node.

In some examples of the present disclosure, the description of a UE may apply equally not only to a user-side endpoint but also to an intermediate point that corresponds to a UE in its relative relationship with a network-side endpoint. Similarly, in some examples of the present disclosure, the description of a BS may apply equally not only to a network-side endpoint but also to an intermediate point that corresponds to a BS in its relative relationship with a user-side endpoint. However, in most cases where there is no additional description of operations involving three and more entities, a communication entity in the present disclosure is briefly described using the term UE and/or BS (or first node and/or second node), which is interpreted to include/replace any endpoint or any intermediate point according to its relationship with other nodes.

That is, to simplify the description in some examples of the present disclosure, an operation entity may be referred to as a BS and/or a UE (or a first node and/or a second node). Further, the term BS and/or UE (or first node and/or second node) may be interpreted/replaced as in the following examples: for example, a BS (or first node) and a UE (or second node) may respectively correspond to a first endpoint and a second endpoint; an endpoint and an intermediate point; an intermediate point and an endpoint; or a first intermediate point and a second intermediate point.

In the present disclosure, there may be no intermediate points or one or more intermediate points between a BS and a UE. When an intermediate point exists, it may correspond to an IAB node/relay/RF repeater/NTN node, or a node supporting other functions. The intermediate point may be a fixed node or a mobile (unfixed) node in terms of location.

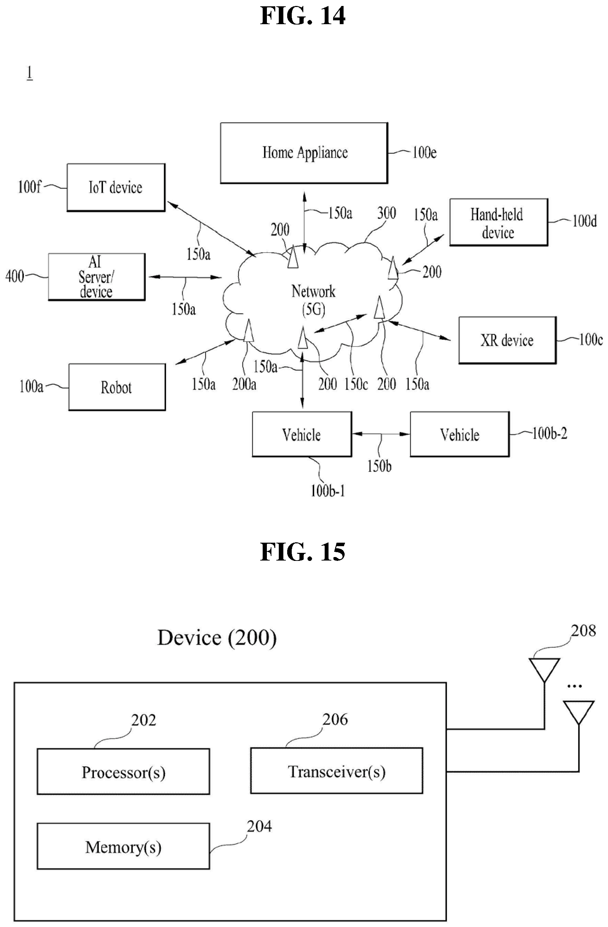

A communication system 1 of FIG. 14 applied to the present disclosure, includes a wireless device, a BS, and a network. A wireless device refers to a device that performs communication using wireless access technologies (e.g., LTE, LTE-A, LTE-A pro, NR, 5G, 5G-A, and 6G), and may be referred to as a communication/wireless/5G device. The wireless device may include, but is not limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 100g. For example, the vehicle may include a vehicle equipped with wireless communication functionality, an autonomous driving vehicle, a vehicle capable of performing inter-vehicle communication, and so on. The vehicles 100b-1 and 100b-2 may include an unmanned aerial vehicle (UAV) (e.g., drone). The XR device 100c includes an augmented reality (AR)virtual reality (VR)/mixed reality (MR) device, and may be implemented in the form of a head mounted device (HMD), a head-up display (HUD) equipped in a vehicle, a television, a smartphone, a computer, a wearable device, a home appliance, a digital signage, a vehicle, or a robot. The hand-held device 100d may include a smartphone, a smart pad, and a wearable device (e.g., a smartwatch, smart glasses, a computer (e.g., a laptop)). The home appliance 100e may include a TV, a refrigerator, a washing machine, and so on. The IoT device 100f may include a sensor, a smart meter, and so on. A wireless device 110 may correspond to a UE (or first node) or an intermediate point. A network device 120 may correspond to a BS (or second node) or another intermediate point. For example, the network device 120 may be implemented as the wireless device 110, and a specific wireless device 120a may operate as the network device 120 for another wireless device 110.

The wireless devices 100a to 100f may be connected to the network 130 via the BS 120. AI technology may be applied to the wireless devices 100a to 100f, and these devices may be connected to an AI server 100g via the network 130. The network 130 may be configured using a 3G, 4G (e.g., LTE), 5G (e.g., NR), or 6G network. The wireless devices 100a to 100f may communicate with each other via the BS 120/network 130, or they may communicate directly (e.g., sidelink communication) without intervention of the BS 120/network 130. For example, the vehicles 100b-1 and 100b-2 may perform direct communication (e.g., vehicle to vehicle (V2V)/vehicle to everything (V2X) communication). Additionally, the IoT device 100f (e.g., a sensor) may communicate directly with another IoT device 100f (e.g., a sensor) or other wireless devices 100a to 100f.

Wireless communication/connections 150a, 150b, and 150c may be established between the wireless devices 100a to 100f and the BS 120, and between BSs 120 themselves. The wireless communication/connections may be achieved through various wireless access technologies such as UL/DL communication 150a, sidelink communication 150b (or D2D communication), and inter-BS communication 150c (e.g., relay and integrated access backhaul (IAB)). Through the wireless communication/connections 150a, 150b, and 150c, wireless devices and BSs/wireless devices, and BSs may transmit/receive wireless signals to each other. For example, the wireless communication/connections 150a, 150b, and 150c may transmit/receive signals through various physical channels. To this end, based on various proposals of the present disclosure, at least some of a process for setting various configuration information for transmitting/receiving wireless signals, various signal processing processes (e.g., channel encoding/decoding, modulation/demodulation, resource mapping/demapping, and so on), and a resource allocation process may be performed.

FIG. 15 illustrates an example of a wireless device applicable to the present disclosure.

Referring to FIG. 15, a wireless device 200 may transmit and receive wireless signals through various wireless access technologies (e.g., LTE, LTE-A, LTE-A pro, NR, 5G, 5G-A, and 6G). The wireless device 200 may include at least one processor 202 and at least one memory 204, and further include at least one transceiver 206 and/or at least one antenna 208.

The processor 202 may be configured to control the memory 204 and/or the transceiver 206, and implement the descriptions, functions, procedures, proposals, methods, and/or flowcharts disclosed in the present disclosure. For example, the processor 202 may process information in the memory 204 to generate first information/signal, and then transmit a wireless signal including the first information/signal through the transceiver 206. Additionally, the processor 202 may receive a wireless signal including second information/signal through the transceiver 206, and then store information obtained by signal processing of the second information/signal in the memory 204. The memory 204 may be connected to the processor 202 and store various pieces of information related to the operation of the processor 202. For example, the memory 204 may store software code including instructions for performing some or all of processes controlled by the processor 202 or for performing the descriptions, functions, procedures, proposals, methods, and/or flowcharts disclosed in the present disclosure. Herein, the processor 202 and the memory 204 may be part of a communication modem/circuit/chip designed to implement wireless communication technology. The transceiver 206 may be connected to the processor 202 and transmit and/or receive wireless signals through the at least one antenna 208. The transceiver 206 may include a transmitter and/or a receiver. The transceiver 206 may be used interchangeably with a radio frequency (RF) unit. In the present disclosure, a wireless device may also refer to a communication modem/circuit/chip.

Hardware elements of the wireless device 200 will be described below in more detail. At least one protocol layer may be implemented by the at least one processor 202, to which the present disclosure is not limited. For example, the at least one processor 202 may implement at least one layer (e.g., functional layers such as physical (PHY), media access control (MAC), radio link control (RLC), packet data convergence protocol (PDCP), radio resource control (RRC), and service data adaptation protocol (SDAP)). The at least one processor 202 may generate at least one Protocol Data Unit (PDU) and/or at least one service data unit (SDU) according to the descriptions, functions, procedures, proposals, methods, and/or flowcharts disclosed in the present disclosure. The at least one processor 202 may generate messages, control information, data, or information according to the descriptions, functions, procedures, proposals, methods, and/or flowcharts disclosed in the present disclosure. The at least one processor 202 may generate a signal (e.g., baseband signal) including a PDU, an SDU, a message, control information, data, or information according to the functions, procedures, proposals, and/or methods disclosed in the present disclosure, and provide it to the at least one transceiver 206. The at least one processor 202 may receive a signal (e.g., baseband signal) from the at least one transceiver 206 and obtain a PDU, an SDU, a message, control information, data, or information according to the descriptions, functions, procedures, proposals, methods, and/or flowcharts disclosed in the present disclosure.

The at least one processor 202 may be referred to as a controller, microcontroller, microprocessor, or microcomputer. The at least one processor 202 may be implemented by hardware, firmware, software, or a combination thereof. In an example, at least one application specific integrated circuit (ASIC), at least one digital signal processor (DSP), at least one digital signal processing device (DSPD), at least one programmable logic device (PLD), or at least one field programmable gate array (FPGA) may be included in the at least one processor 202. The descriptions, functions, procedures, proposals, methods, and/or flowcharts disclosed in the present disclosure may be implemented using firmware or software, and the firmware or software may be implemented to include a module, a procedure, a function, and so on. The firmware or software configured to perform the descriptions, functions, procedures, proposals, methods, and/or flowcharts disclosed in the present disclosure may be included in the at least one processor 202 or stored in the at least one memory 204 and driven by the at least one processor 202. The descriptions, functions, procedures, proposals, methods, and/or flowcharts disclosed in the present disclosure may be implemented using firmware or software in the form of code, an instruction, and/or a set of instructions.

The at least one memory 204 may be connected to the at least one processor 202 and store various types of data, signals, messages, information, programs, code, instructions, and/or commands. The at least one memory 204 may include read only memory (ROM), random access memory (RAM), erasable programmable read only memory (EPROM), flash memory, a hard drive, a register, a cache memory, a computer-readable storage medium, and/or a combination thereof. The at least one memory 204 may be located inside and/or outside the at least one processor 202. Additionally, the at least one memory 204 may be connected to the at least one processor 202 through various technologies such as wired or wireless connections.

The at least one transceiver 206 may transmit user data, control information, a wireless signal/channel, and so on mentioned in the methods and/or flowcharts of the present disclosure to at least one other device. The at least one transceiver 206 may receive user data, control information, a wireless signal/channel, and so on mentioned in the descriptions, functions, procedures, proposals, methods, and/or flowcharts disclosed in the present disclosure from at least one other device. For example, the at least one transceiver 206 may be connected to the at least one processor 202 and transmit and receive wireless signals. For example, the at least one processor 202 may control the at least one transceiver 206 to transmit user data, control information, or a wireless signal to at least one other device. Additionally, the at least one processor 202 may control the at least one transceiver 206 to receive user data, control information, or a wireless signal from at least one other device. Further, the at least one transceiver 206 may be connected to the at least one antenna 208, and configured to transmit and receive user data, control information, a wireless signal/channel, and so on mentioned in the descriptions, functions, procedures, proposals, methods, and/or flowcharts disclosed in the present disclosure through the at least one antenna 208. In the present disclosure, at least one antenna may be a plurality of physical antennas or a plurality of logical antennas (e.g., antenna ports). The at least one transceiver 206 may convert a received wireless signal/channel from an RF band signal to a baseband signal to process the received user data, control information, wireless signal/channel, and so on, using the at least one processor 202. The at least one transceiver 206 may convert user data, control information, a wireless signal/channel, and so on processed using the at least one processor 202 from a baseband signal to an RF band signal. To this end, the at least one transceiver 206 may include an (analog) oscillator and/or filter.

The components of the wireless device described with reference to FIG. 15 may be referred to by different terms from a functional perspective. For example, the processor 202 may be referred to as a controller, the transceiver 206 as a communication unit, and the memory 204 as a storage unit. In some cases, the communication unit may be used to mean including at least part of the processor 202 and the transceiver 206.

The structure of the wireless device described with reference to FIG. 15 may be understood as the structure of at least part of various devices. For example, the structure of the wireless device illustrated in FIG. 15 may be at least part of the various devices described with reference to FIG. 14 (e.g., the robot 100a, the vehicles 100b-1 and 100b-2, the XR device 100c, the hand-held device 100d, the home appliance 100e, the IoT device 100f, and the AI device/server 100g). Further, according to various embodiments, the device may further include other components in addition to the components illustrated in FIG. 15.

For example, the device may be a portable device such as a smartphone, smart pad, wearable device (e.g., smartwatch and smart glasses), or portable computer (e.g., laptop). In this case, the device may further include at least one of a power supply unit that supplies power and includes a wired/wireless charging circuit, a battery, and so on, an interface unit that includes at least one port (e.g., audio input/output port and video input/output port) for connection to other devices, and an input/output unit for inputting and outputting video information/signals, audio information/signals, data, and/or information input from a user.

For example, the device may be a mobile device such as a mobile robot, vehicle, train, unmanned aerial vehicle (UAV), vessel, and so on. In this case, the device may further include at least one of a driving unit that includes at least one of an engine, motor, powertrain, wheel, brake, or steering system of the device, a power supply unit that supplies power and includes a wired/wireless charging circuit, a battery, and so on, a sensor unit that senses status information, environmental information, and user information of the device or its surroundings, an autonomous driving unit that performs functions such as path maintenance, speed control, and destination setting, and a positioning unit that obtains mobile object position information through the global positioning system (GPS) and various sensors.

For example, the device may be an XR device such as an HMD, a head-up display (HUD) equipped in a vehicle, a television, a smartphone, a computer, a wearable device, a home appliance, digital signage, a vehicle, or a robot. In this case, the device may further include at least one of a power supply unit that supplies power and includes a wired/wireless charging circuit, a battery, and so on, an input/output unit that obtains control information, data, and so on from an external source and outputs a generated XR object, and a sensor unit that senses status information, environmental information, and user information of the device or its surroundings.

For example, the device may be a robot categorized as industrial, medical, home, military, and so on, depending on its purpose or field of use. In this case, the device may further include at least one of a sensor unit that senses status information, environmental information, and user information of the device or its surroundings, and a driving unit that performs various physical actions such as moving robot joints.

For example, the device may be an AI device such as a TV, projector, smartphone, PC, laptop, digital broadcasting terminal, tablet PC, wearable device, set-top box (STB), radio, washing machine, refrigerator, digital signage, robot, or vehicle. In this case, the device may further include at least one of an input unit that obtains various types of data from an external source, an output unit that generates an output related to vision, hearing, or touch, a sensor unit that senses status information, environmental information, and user information of the device or its surroundings, and a training unit that trains a model including an artificial neural network using training data.

The structure of the wireless device illustrated in FIG. 15 may be understood as part of a Radio Access Network (RAN) node (e.g., BS, DU, RU, RR, and so on). That is, the device illustrated in FIG. VI may be a RAN node. In this case, the device may further include a wired transceiver for front haul and/or back haul communication. However, when front haul and/or back haul communication is based on wireless communication, the at least one transceiver 206 illustrated in FIG. 15 may be used for front haul and/or back haul communication, and a wired transceiver may not be included.

The above-described embodiments correspond to combinations of elements and features of the present disclosure in prescribed forms. The respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of an embodiment may be included in another embodiment or may be substituted for corresponding configurations or features of another embodiment. An embodiment may be configured by combining claims failing to have relation of explicit citation in the appended claims together or may be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

The present disclosure is applicable to UEs, BSs, or other apparatuses in a wireless mobile communication system.

## Claims

1. A method for transmitting a signal by a wireless communication device, the method comprising:

   receiving reference signal configuration information related to a plurality of carriers through higher-layer signaling;
   receiving control information related to deactivation or dormancy of at least one carrier among the plurality of carriers; and
   transmitting at least one of a data signal and a reference signal through at least part of the plurality of carriers, wherein, based on bandwidth (BW) aggregation across the plurality of carriers being configured for the reference signal through the reference signal configuration information, the transmission of the reference signal is performed also on the at least one deactivated or dormant carrier.

2. The method of claim 1, wherein the transmission of the reference signal is performed without the transmission of the data signal on the at least one deactivated or dormant carrier.

3. The method of claim 1, wherein the control information includes information on whether the deactivation or dormancy of the at least one carrier is for data communication management or for positioning.

4. The method of claim 3, wherein, based on the deactivation or dormancy of the at least one carrier being for the data communication management, the transmission of the reference signal is performed also on the at least one deactivated or dormant carrier.

5. The method of claim 1, wherein the configuration for the BW aggregation includes a plurality of sub-configurations related to different carrier sets, and
   wherein the transmission of the reference signal is performed based on a specific sub-configuration related to a carrier set including the at least one deactivated or dormant carrier.

6. The method of claim 5, wherein the specific sub-configuration to be used for the transmission of the reference signal is determined based on an indication from a network.

7. The method of claim 5, wherein the specific sub-configuration to be used for the transmission of the reference signal is determined based on the deactivation or dormancy of the at least one carrier.

8. The method of claim 5, wherein the specific sub-configuration to be used for the transmission of the reference signal is determined based on a predetermined priority rule.

9. The method of claim 1, wherein the wireless communication device is a user equipment (UE), and
   wherein the reference signal is a sounding reference signal (SRS) for positioning.

10. A non-transitory storage medium storing instructions configured to cause a processor, when executed by the processor, to perform operations, the operations performed by the processor comprising:

receiving reference signal configuration information related to a plurality of carriers through higher-layer signaling;

receiving control information related to deactivation or dormancy of at least one carrier among the plurality of carriers; and

transmitting at least one of a data signal and a reference signal through at least part of the plurality of carriers, wherein, based on bandwidth (BW) aggregation across the plurality of carriers being configured for the reference signal through the reference signal configuration information, the transmission of the reference signal is performed also on the at least one deactivated or dormant carrier.

11. A wireless communication device comprising:

a memory storing instructions; and

a processor configured to operate by executing the instructions,

wherein operations of the processor comprise:

receiving reference signal configuration information related to a plurality of carriers through higher-layer signaling;

receiving control information related to deactivation or dormancy of at least one carrier among the plurality of carriers; and

transmitting at least one of a data signal and a reference signal through at least part of the plurality of carriers, wherein, based on bandwidth (BW) aggregation across the plurality of carriers being configured for the reference signal through the reference signal configuration information, the transmission of the reference signal is performed also on the at least one deactivated or dormant carrier.

12. The wireless communication device of claim 11, further comprising a transceiver, wherein the wireless communication device is a user equipment (UE).

13. The wireless communication device of claim 11, wherein the wireless communication device is a processing device configured to control a user equipment (UE).

14. A method for receiving a signal by a wireless communication device, the method comprising:

transmitting reference signal configuration information related to a plurality of carriers through higher-layer signaling;

transmitting control information related to deactivation or dormancy of at least one carrier among the plurality of carriers; and

receiving at least one of a data signal and a reference signal through at least part of the plurality of carriers, wherein, based on bandwidth (BW) aggregation across the plurality of carriers being configured for the reference signal through the reference signal configuration information, the reception of the reference signal is performed also on the at least one deactivated or dormant carrier.

15. A wireless communication device comprising:

a memory storing instructions; and

a processor configured to operate by executing the instructions,

wherein operations of the processor comprise:

transmitting reference signal configuration information related to a plurality of carriers through higher-layer signaling;

transmitting control information related to deactivation or dormancy of at least one carrier among the plurality of carriers; and

receiving at least one of a data signal and a reference signal through at least part of the plurality of carriers, wherein, based on bandwidth (BW) aggregation across the plurality of carriers being configured for the reference signal through the reference signal configuration information, the reception of the reference signal is performed also on the at least one deactivated or dormant carrier.

# FIG. 1

Initial Cell Search — PSS/SSS & [DLRS] & PBCH — S11

System Information Reception — PDCCH/ PDSCH (BCCH) — S12

Random Access Procedure — PRACH — S13, PDCCH/ PDSCH — S14, PRACH — S15, PDCCH/ PDSCH — S16

General DL/UL Tx/Rx — S18 — PDCCH/ PDSCH, PUSCH/ PUCCH — S17

- DL/UL ACK/NACK
- UE CQI/PMI/Rank Report using PUSCH and PUCCH

# FIG. 2

Reference Source

GNSS signals (B)

LPP

Measurements(A,B or A+B) or Location

Assistance Data

Target Device — UE/SET

Location server — E-SMLC/SLP/LMF

radio signals (A)

Reference Source

ACCESS NODE / BS / TS / NG-RAN

NRPPa

- E-CID Location Information Transfer
- OTDOA Information Transfer
- Reporting of General Error Situations

# FIG. 3

(a)

(b)

# FIG. 4

## FIG. 5

EP 4 787 758 A1

# FIG. 6

(a)

(b)

# FIG. 7

705
Identify Sensing Capability

710
Configure Sensing Operation

715
Perform Sensing Operation

# FIG. 8

Reporting UE capability — 801

Receiving configuration information through higher-layer signaling — 802

Receiving indication information for each cell — 803

Receiving MAC-CE/DCI — 804

Transmitting BW-aggregated SRS — 805

# FIG. 9

```
┌──────────────────────────────────────────────┐
│                                                │  901
│         Receiving UE capability reporting      │
│                                                │
└──────────────────────────────────────────────┘
                        │
                        ▼
┌──────────────────────────────────────────────┐
│                                                │  902
│   Transmitting configuration information through│
│              higher-layer signaling            │
└──────────────────────────────────────────────┘
                        │
                        ▼
┌──────────────────────────────────────────────┐
│                                                │  903
│    Transmitting indication information for each cell│
│                                                │
└──────────────────────────────────────────────┘
                        │
                        ▼
┌ ─ ─ ─ ─ ─ ─ ─ ─ ─ ─ ─ ─ ─ ─ ─ ─ ─ ─ ─ ─ ─ ─ ┐
│                                                   904
│            Transmitting MAC-CE/DCI             │
│                                                │
└ ─ ─ ─ ─ ─ ─ ─ ─ ─ ─ ─ ─ ─ ─ ─ ─ ─ ─ ─ ─ ─ ─ ┘
                        │
                        ▼
┌──────────────────────────────────────────────┐
│                                                │  905
│          Receiving BW-aggregated SRS           │
│                                                │
└──────────────────────────────────────────────┘
```

# FIG. 10

First wireless communication device        Second wireless communication device

Higher-layer signaling (A05)

Indication of dormancy or deactivation of carrier (A10)

Transmission and reception of RS through first group of carriers (A15)

Transmission and reception of data through second group of carriers (A20)

# FIG. 11

Receiving reference signal configuration information related to a plurality of carriers — B05

Receiving control information related to deactivation/dormancy of at least one carrier — B10

Transmitting at least one of data signal and reference signal — B15

# FIG. 12

| |
|---|
| Transmitting reference signal configuration information related to a plurality of carriers | C05 |

↓

| |
|---|
| Transmitting control information related to deactivation/dormancy of at least one carrier | C10 |

↓

| |
|---|
| Receiving at least one of data signal and reference signal | C15 |

# FIG. 13

EP 4 787 758 A1

# FIG. 14

<u>1</u>

# FIG. 15

## INTERNATIONAL SEARCH REPORT

| International application No. |
|---|
| **PCT/KR2024/013214** |

### A. CLASSIFICATION OF SUBJECT MATTER

**H04L 5/00**(2006.01)i; **H04W 72/231**(2023.01)i

According to International Patent Classification (IPC) or to both national classification and IPC

### B. FIELDS SEARCHED

Minimum documentation searched (classification system followed by classification symbols)

H04L 5/00(2006.01); H04L 27/26(2006.01); H04W 72/02(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 반송파(carrier), 참조 신호(reference signal), SRS(sounding reference signal), 비활성(deactivation), 휴면(dormancy), 대역폭 집성(bandwidth aggregation)

### C. DOCUMENTS CONSIDERED TO BE RELEVANT

| Category* | Citation of document, with indication, where appropriate, of the relevant passages | Relevant to claim No. |
|---|---|---|
| Y | US 2023-0208578 A1 (FUTUREWEI TECHNOLOGIES, INC.) 29 June 2023 (2023-06-29)<br>See paragraphs [0082], [0085]-[0086], [0107], [0115]-[0116] and [0538]; and claim 1. | 1-15 |
| Y | ERICSSON. Bandwidth aggregation for positioning measurements. R1-2308171, 3GPP TSG-RAN WG1 #114. 11 August 2023.<br>See pages 5-6. | 1-15 |
| Y | US 2020-0178213 A1 (ZTE CORPORATION) 04 June 2020 (2020-06-04)<br>See claim 3. | 6-8 |
| A | US 2023-0083549 A1 (VIVO MOBILE COMMUNICATION CO., LTD.) 16 March 2023 (2023-03-16)<br>See claims 1-13. | 1-15 |
| A | US 2021-0160039 A1 (INTERDIGITAL PATENT HOLDINGS, INC.) 27 May 2021 (2021-05-27)<br>See claims 1-7. | 1-15 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 December 2024** | **16 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/013214**

| Patent document cited in search report | | | Publication date (day/month/year) | Patent family member(s) | | | Publication date (day/month/year) |
|---|---|---|---|---|---|---|---|
| US | 2023-0208578 | A1 | 29 June 2023 | CN | 108886457 | B | 30 November 2021 |
| | | | | CN | 114710242 | A | 05 July 2022 |
| | | | | EP | 3433968 | A1 | 30 January 2019 |
| | | | | EP | 3433968 | B1 | 27 April 2022 |
| | | | | JP | 2020-099057 | A | 25 June 2020 |
| | | | | JP | 6651650 | B2 | 19 February 2020 |
| | | | | JP | 6974513 | B2 | 01 December 2021 |
| | | | | KR | 10-2018-0128043 | A | 30 November 2018 |
| | | | | KR | 10-2188674 | B1 | 08 December 2020 |
| | | | | US | 10693610 | B2 | 23 June 2020 |
| | | | | US | 11476989 | B2 | 18 October 2022 |
| | | | | US | 2020-0322108 | A1 | 08 October 2020 |
| | | | | WO | 2017-173388 | A1 | 05 October 2017 |
| US | 2020-0178213 | A1 | 04 June 2020 | CN | 109151844 | A | 04 January 2019 |
| | | | | CN | 109151844 | B | 24 March 2023 |
| | | | | US | 11737054 | B2 | 22 August 2023 |
| | | | | WO | 2018-227985 | A1 | 20 December 2018 |
| US | 2023-0083549 | A1 | 16 March 2023 | CN | 113708899 | A | 26 November 2021 |
| | | | | CN | 113708899 | B | 21 April 2023 |
| | | | | EP | 4131831 | A1 | 08 February 2023 |
| | | | | EP | 4131831 | A4 | 06 September 2023 |
| | | | | JP | 2023-522733 | A | 31 May 2023 |
| | | | | JP | 7407307 | B2 | 28 December 2023 |
| | | | | WO | 2021-233289 | A1 | 25 November 2021 |
| US | 2021-0160039 | A1 | 27 May 2021 | CN | 104394595 | B | 11 May 2018 |
| | | | | EP | 3917250 | A1 | 01 December 2021 |
| | | | | EP | 4408059 | A1 | 31 July 2024 |
| | | | | JP | 2021-064978 | A | 22 April 2021 |
| | | | | JP | 2022-166328 | A | 01 November 2022 |
| | | | | JP | 6630785 | B2 | 15 January 2020 |
| | | | | JP | 6830147 | B2 | 17 February 2021 |
| | | | | JP | 7133659 | B2 | 08 September 2022 |
| | | | | KR | 10-2015-0038721 | A | 08 April 2015 |
| | | | | US | 11095421 | B2 | 17 August 2021 |
| | | | | US | 11671232 | B2 | 06 June 2023 |
| | | | | US | 2023-0308252 | A1 | 28 September 2023 |
| | | | | WO | 2010-051209 | A1 | 06 May 2010 |

Form PCT/ISA/210 (patent family annex) (July 2022)